(19) Europäisches Patentamt
European Patent Office
Office européen des brevets

(11) **EP 4 328 517 A1**

(12) **EUROPÄISCHE PATENTANMELDUNG**

(43) Veröffentlichungstag:
**28.02.2024 Patentblatt 2024/09**

(21) Anmeldenummer: **23170505.4**

(22) Anmeldetag: **27.04.2023**

(51) Internationale Patentklassifikation (IPC):
*F24S 10/70* (2018.01)  *F24S 20/20* (2018.01)
*F24S 23/30* (2018.01)  *F24S 40/10* (2018.01)
*F24S 40/52* (2018.01)  *F24S 23/70* (2018.01)
*F24S 60/30* (2018.01)  *F24S 80/50* (2018.01)

(52) Gemeinsame Patentklassifikation (CPC):
**F24S 10/70; F24S 20/20; F24S 23/30; F24S 40/10;**
**F24S 40/52;** F24S 23/70; F24S 60/30;
F24S 2080/503

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**KH MA MD TN**

(30) Priorität: **23.08.2022 EP 22191791**

(71) Anmelder: **Özkan, Edip**
**60594 Frankfurt am Main (DE)**

(72) Erfinder: **Özkan, Edip**
**60594 Frankfurt am Main (DE)**

(54) **VORRICHTUNG ZUR GEWINNUNG VON SOLARENERGIE, WÄRMEKOLLEKTOR, ANLAGE ZUR WÄRMEERZEUGUNG UND VERFAHREN ZUR STEUERUNG DAVON**

(57) Es wird eine Vorrichtung mit einer Halterung (110) und optischen Fokussiereinrichtungen (130) zur Gewinnung von Solarenergie vorgeschlagen. Die Halterung hat die Form einer halbkugelförmigen Kuppel mit einem Radius, der durch die Brennweite der Fokussiereinrichtungen (130) gegeben ist. Ferner wird ein Wärmekollektor vorgeschlagen, der eine solche Halterung (110) und einen Brennpunktkörper (120) umfasst, der von einem Wärmetransportfluid durchströmt wird. Außerdem wird eine Anlage zur Wärmeerzeugung mit einem Reservoir für kaltes Wärmetransportfluid, einem solchen Wärmekollektor, einem Reservoir für warmes Wärmetransportfluid, einem Anschluss für Verbraucher, z.B. Fernwärme oder Turbine-Generator-Kombinationen, sowie einer Rückführungsleitung vorgeschlagen, und ein Verfahren zur Steuerung einer solchen Anlage. Diese Form der solarthermischen Energiegewinnung kommt mit sehr wenig beweglichen Teilen aus und hat einen geringen Flächenbedarf.

Fig. 1

EP 4 328 517 A1

**Beschreibung**

Gebiet der Erfindung

Die Erfindung betrifft eine Vorrichtung zur Gewinnung von Solarenergie, einen Wärmekollektor, eine Anlage zur Wärmeerzeugung und ein Verfahren zur Steuerung davon.

Derartige Systeme und Vorrichtungen dienen vorwiegend zur Wärmeerzeugung und ggf. zur Gewinnung elektrischer Energie, wobei ein Wärmetransportfluid genutzt wird und die Sonneneinstrahlung als Primärenergiequelle dient.

Stand der Technik

Es sind viele unterschiedliche Systeme zur thermischen Umwandlung von Sonnenenergie in nützlichere Energieformen bekannt. Die Veröffentlichung WO 81/03220 A1 offenbart beispielsweise ein solches Komplettsystem, das insbesondere für den Hausgebrauch bestimmt ist und einen Stirlingmotor umfasst, der mit einem Generator zur Stromerzeugung gekoppelt ist. Dieses System hat jedoch erhebliche Nachteile, u.a. die Verwendung von heißer Luft und Felsblöcken als Wärmeleit- und Speichermedium, was etwas unpraktisch und ziemlich ineffizient ist, sowie die Verwendung eines komplexen und unzureichenden Systems von Sonnenkollektoren, die auf dem Dach eines Hauses angebracht werden.

Typischerweise werden bei Systemen, die für die Energiegewinnung in größerem Maßstab geeignet sind, fortschrittlichere Sonnenkollektoren mit einer Art Parabolspiegel eingesetzt, wie z.B. in der Veröffentlichung US 4,335,578 A. Der dort gezeigte schüsselförmige Reflektor ist jedoch sehr anfällig für Windeinflüsse, da er hoch über dem Boden freistehend montiert ist. Er ist zudem schwer sauber zu halten und aufgrund seiner Größe teuer in der Herstellung. Die hohe Windanfälligkeit führt dazu, dass das System bei größeren Windstärken nicht betrieben werden kann, da der Kollektor dann horizontal ausgerichtet werden muss, um Schäden zu vermeiden. Die bei diesem System angewandte Methode der Wärmeaufnahme und des Wärmetransports ist zudem recht kompliziert, da zwei verschiedene Flüssigkeiten, Zustandsänderungen dieser Flüssigkeiten, Wärmetauscher usw. verwendet werden, was die Herstellung und Wartung des Systems aufwändig macht.

Modernere Systeme, wie das in der Druckschrift US 2006/0225729 A1 offengelegte, versuchen die hohe Windanfälligkeit von schalenförmigen Sonnenkollektoren durch den Einsatz kleinerer rinnenförmiger Kollektoren zu vermeiden, die in der Regel ein Rohr oder ähnliches an der Brennlinie der Rinne haben, durch das die Wärmeleit- und Speicherflüssigkeit fließen kann. Solche Geräte können viel näher am Boden montiert werden. Sie haben jedoch auch erhebliche Nachteile. Die Rinnen neigen dazu, als Schmutzfänger zu wirken, was ihren Wirkungsgrad stark verringert. Außerdem können solche Systeme aufgrund ihrer linearen Anordnung dem Sonnenstand nur sehr begrenzt nachgeführt werden, was ihren Gesamtwirkungsgrad verringert. Der Flächenbedarf solcher Systeme ist zudem relativ hoch.

Letzteres gilt auch für die Solarkraftwerke Aschalim in Israel, Noor in Marokko und das Solarturm-Versuchskraftwerk Jülich. Diese so genannte Turmtechnologie arbeitet mit Hilfe von autonomen Spiegeln, die das Sonnenlicht auf einen Brennpunkt fokussieren. Dazu wird bspw. eine Fläche von ca. 1,14 km * 1,14 km für einen Turm der Höhe 265 m gebraucht. Dies begrenzt die Skalierungsmöglichkeit eines solchen Kraftwerktyps erheblich.

Einige der Nachteile, die mit der Verwendung von Parabolspiegeln (ob schalen- oder rinnenförmig) als Sonnenkollektoren verbunden sind, können durch die Verwendung von Fresnel-Linsen überwunden werden, wie z.B. im Dokument US 6,775,982 B1 offenbart wird. Dort sind jedoch sehr große Fresnel-Linsen von z.B. 20 m Durchmesser vorgesehen. Solche gro-ßen Fresnel-Linsen sind jedoch recht schwer und teuer und müssen wegen ihrer großen Brennweite hoch über dem Boden montiert werden, was wiederum zu einer hohen Windanfälligkeit führt.

Ein noch fortschrittlicheres System mit Sonnenstandsnachführung ist in WO 2013/149950 A2 beschrieben. Allerdings weist dieses relativ viele bewegliche Teile auf, was zu einem erhöhten Wartungsaufwand führen kann. Auch die Verwendung von flüssigem Salz als Wärmeleitmedium macht das System relativ teuer. Außerdem muss es unbedingt gegen zu starke Abkühlung geschützt werden, da das Salz niemals fest werden darf.

Aufgabe

Aufgabe der Erfindung ist es, eine Vorrichtung zur Gewinnung von Solarenergie, einen Wärmekollektor, eine Anlage zur Wärmeerzeugung und ein Verfahren zur Steuerung davon anzugeben, welche einen geringen Flächenbedarf haben und mit möglichst wenig beweglichen Teilen auskommen.

Lösung

Diese Aufgabe wird durch den Gegenstand des unabhängigen Anspruchs gelöst. Vorteilhafte Weiterbildungen des Gegenstands des unabhängigen Anspruchs sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Zur Lösung der Aufgabe wird eine Vorrichtung zur Gewinnung von Solarenergie mit einer Halterung und optischen Fokussiereinrichtungen vorgeschlagen. Jede der optischen Fokussiereinrichtungen der Vorrichtung zur Gewinnung von Solarenergie weist eine Brennweite und einen Brennpunkt auf, wobei alle optischen Fokussiereinrichtungen die gleiche Brennweite aufweisen. Die Halterung der Vorrichtung zur Gewinnung von Solarenergie hat die Form einer ersten halbkugelförmigen Kuppel mit einem ersten Radius oder eines Segments einer ersten halbkugelförmigen Kuppel mit einem ersten Radius. Dieser erste Radius der ersten halbkugelförmigen Kuppel ist durch die Brennweite der Fokussiereinrichtungen gegeben. Die Fokussiereinrichtungen sind in der Halterung so angeordnet, dass die Brennpunkte der Fokussiereinrichtungen zusammenfallen.

Mit einer solchen Halterung können optische Fokussiereinrichtungen, beispielsweise für solarthermische Energiegewinnung, platzsparend, stabil und robust untergebracht werden. Die Halterung weist in ihrer einfachsten Form keine beweglichen Teile auf, was möglichen Verschleiß und somit entsprechende Wartungsanforderungen senkt. Im gemeinsamen Brennpunkt der optischen Fokussiereinrichtungen, der im Mittelpunkt der Kuppel liegt, kann die Wärme des einfallenden und fokussierten Sonnenlichts genutzt werden.

Die Kuppel muss, abhängig von der gewünschten Größe der Vorrichtung, geometrisch gesehen nicht vollständig sein: Die Halterung kann auch lediglich als Segment einer Kuppel ausgebildet sein, ggf. sogar nur als Band. Entscheidend ist, dass die optischen Fokussiereinrichtungen so montiert werden, dass für den im Tagesverlauf wandernden Sonnenstand jeweils ein optimaler Einfall und eine optimale Fokussierung in den gemeinsamen Brennpunkt möglich ist. Beispielsweise können die Fokussiereinrichtungen gleichmäßig über die Kuppeloberfläche verteilt angeordnet sein, d.h. jeweils um den gleichen Winkel gegeneinander verschoben, oder auch Halbkreisen oder anderen Variationen.

Es ist auch möglich, für die optischen Fokussiereinrichtungen Justiermöglichkeiten vorzusehen, damit beispielsweise die Auswirkungen der Neigung der Erdachse oder auch der Elliptizität der Erdumlaufbahn berücksichtigt werden können, die im Jahresverlauf geringfügige Veränderungen an der Fokussierung des Sonnenlichts hervorrufen könnten.

Prinzipiell ist es auch möglich, die Halterung in Form einer Spitzkuppel oder einer ovalen bzw. eiförmigen Kuppel vorzusehen, wodurch eine größere Bauhöhe erreicht werden kann. Dann müssten jedoch die optischen Fokussiereinrichtungen mit je nach Einbauposition unterschiedlichen Brennweiten versehen werden, damit sie das einfallende Licht nach wie vor in einem gemeinsamen Brennpunkt bündeln.

Vorzugsweise handelt es sich bei den Fokussiereinrichtungen um Linsen, bevorzugt um Fresnel-Linsen. Fresnel-Linsen sind bei gleicher Fläche dünner und daher sowohl kostengünstiger als auch leichter, insbesondere bei Ausführungen mit relativ kurzen Brennweiten. Somit kann die Halterung kompakter ausgeführt werden.

Eventuelle thermische Überlastungen am gemeinsamen Brennpunkt der Fokussiereinrichtungen lassen sich vermeiden, wenn die Halterung eine steuerbare Blendenvorrichtung zum Verdunkeln der optischen Fokussiereinrichtungen aufweist.

Bei einer bevorzugten Ausführungsform der Halterung ist als Blendenvorrichtung eine zweite halbkugelförmige Kuppel oder ein Segment einer zweiten halbkugelförmigen Kuppel mit einem zweiten Radius vorhanden. Dieser zweite Radius ist so viel größer als der erste Radius, dass die zweite halbkugelförmige Kuppel oder das Segment der zweiten halbkugelförmigen Kuppel außerhalb der ersten halbkugelförmigen Kuppel oder des Segments der ersten halbkugelförmigen Kuppel liegt. Die Blendenvorrichtung besteht aus lichtundurchlässigem Material und weist Öffnungen für die Fokussiereinrichtungen auf. Sie ist derart drehbar gelagert, dass sie zwischen einer ersten Position, in der die Öffnungen die Fokussiereinrichtungen freigeben, und einer zweiten Position, in der die Blendenvorrichtung die Fokussiereinrichtungen verdeckt, gedreht und/oder geschwenkt werden kann. Vorzugsweise wird zum Drehen und/oder Schwenken der Blendenvorrichtung ein elektrischer Stellantrieb verwendet.

Alternativ zur soeben beschriebenen Ausführungsform kann die Blendenvorrichtung eine elektrochrome Folie umfassen, die die erste halbkugelförmige Kuppel oder das erste Segment einer halbkugelförmigen Kuppel oder mindestens eine der Fokussiereinrichtungen bedeckt. Diese Variante hat den Vorteil, dass auf einen Antrieb verzichtet werden kann. Es sind somit keine beweglichen Teile vorhanden, so dass weniger Wartungsaufwand erforderlich ist.

Bei einer vorteilhaften Weiterbildung der Halterung ist an der sonnenabgewandten Seite der Halterung mindestens ein Spiegel vorhanden. Dadurch kann Licht auf an der sonnenabgewandten Seite der Halterung montierte optische Fokussiereinrichtungen gelenkt werden, wodurch auch diese genutzt werden können. Der mindestens eine Spiegel kann beispielsweise ein Kugelsegmentspiegel sein mit einem Radius, der größer ist als der Radius der Kuppel, z.B. doppelt so groß.

Zur Lösung der Aufgabe wird weiterhin ein Wärmekollektor zum Erwärmen eines Wärmetransportfluids vorgeschlagen. Dieser weist mindestens eine Vorrichtung zur Gewinnung von Solarenergie wie bereits beschrieben auf, außerdem einen Brennpunktkörper für jede der Vorrichtungen zur Gewinnung von Solarenergie. Jeder Brennpunktkörper ist im jeweiligen Brennpunkt der optischen Fokussiereinrichtungen der mindestens einen Vorrichtung zur Gewinnung von Solarenergie angeordnet und besteht aus einem hitzebeständigen und wärmeleitenden Material. Außerdem weist jeder Brennpunktkörper einen Durchfluss für das Wärmetransportfluid auf. Das Wärmetransportfluid wird also erwärmt, wenn es den Durchfluss durchfließt, und kann dann einer weiteren Verwendung zugeführt werden. Als Wärmetransportfluid wird Wasser besonders bevorzugt, da es kostengünstig, leicht zu handhaben und vollkommen ungiftig ist; es sind jedoch viele andere Stoffe für diesen Zweck denkbar. Falls das Wärmetransportfluid in einem vollständig geschlossenen Kreislauf eingeschlossen ist, könnten beispielsweise Ethanol, Chloroform, Benzol, Methanol, Pentan oder Diethylether verwendet werden.

Vorzugsweise kann der Brennpunktkörper mit einem Hitzeschild in Richtungen, die von den optischen Fokussiereinrichtungen weg verlaufen, z.B. nach unten, abgeschirmt werden, so dass z.B. Sensoren oder auch eine Steuerung vor zu großer Hitzeentwicklung geschützt sind. Alternativ oder ergänzend dazu kann unterhalb des Brennpunktkörpers auch ein Parabolspiegel in Form einer Wanne vorgesehen sein, um die Ausnutzung einfallenden Sonnenlichtes zu verbessern.

Mit Hilfe einer Blendenvorrichtung, wie sie bereits beschrieben wurde, und einer geeigneten Steuerung, die z.B. die Temperatur des Wärmetransportfluids berücksichtigt, kann ein schubweiser oder auch kontinuierlicher Betrieb erreicht werden. Dies sollte entsprechend eingerichtet werden, abhängig davon, wie das Wärmetransportfluid zu- und abfließen kann.

Falls auch Nachts oder bei schlechtem Wetter mit unzureichender Sonneneinstrahlung Wärme benötigt wird, kann am Brennpunktkörper auch eine Heizung vorgesehen sein, welche beispielsweise elektrisch oder mittels Mikrowellen arbeitet.

Die Aufgabe wird ferner gelöst durch eine Anlage zur Wärmeerzeugung mit einem Reservoir für kaltes Wärmetransportfluid, einem Wärmekollektor wie soeben beschrieben, und mindestens einem Reservoir für warmes Wärmetransportfluid. Das Wärmetransportfluid strömt über geeignete Leitungen vom Reservoir für kaltes Wärmtransportfluid durch den Wärmekollektor zum Reservoir für warmes Wärmetransportfluid. Ferner hat die Anlage mindestens einen Anschluss für Wärmeverbraucher, welcher dem Reservoir für warmes Wärmetransportfluid nachgeschaltet ist, und mindestens eine Rückführungsleitung, die von dem Wärmeverbraucher zum Reservoir für kaltes Wärmetransportfluid verläuft.

Beim Durchströmen des Wärmekollektors erwärmt sich das Wärmetransportfluid von der Temperatur, die im Reservoir für kaltes Wärmetransportfluid herrscht, z.B. 60 °C, auf eine höhere Temperatur, z.B. 110 °C, die im Reservoir für warmes Wärmetransportfluid herrscht. Dabei kann das Wärmetransportfluid auch zumindest teilweise verdampfen. Als Wärmeverbraucher kann z.B. ein Anschluss an ein Fernwärmenetz oder ein lokaler Heißwasserverbraucher dienen, es sind aber auch Ausführungen möglich, bei denen mit Hilfe des warmen Wärmetransportfluids eine Stromerzeugung vorgesehen ist.

Vorzugsweise sollten alle Rohrleitungen auf gleicher Höhe verlaufen und den gleichen Durchmesser aufweisen, wodurch der Strömungswiderstand der Anlage minimiert werden kann.

Eine solche Anlage kann bei Bedarf auch sehr kompakt ausgeführt werden, indem z.B. der Wärmekollektor unmittelbar oberhalb des Reservoirs für warmes Wärmetransportfluid angebracht ist, und zwar derart, dass der Brennpunktkörper in dieses Reservoir hineinragt.

Vorzugsweise ist zwischen dem Reservoir für kaltes Wärmetransportfluid und dem Wärmekollektor und/oder in der Rückführungsleitung mindestens ein Ventil vorhanden, das eine Vorzugsrichtung für einen Durchfluss aufweist. Ist eine Mehrzahl solcher Ventile vorhanden, können diese als Barriere zwischen den warmen und den weniger warmen Bereichen der Anlage dienen. Als Ventil, das eine Vorzugsrichtung für einen Durchfluss aufweist, kann beispielsweise ein Tesla-Ventil, oder auch eine Rückschlagsklappe eingesetzt werden.

Besonders bevorzugt wird jedoch eine Ausführungsform, bei der das mindestens eine Ventil ein wärmeisoliertes, nach oben gekrümmtes Rohr aufweist, welches einen Überlauf bildet, dem eine Rückschlagsklappe vor- und/oder nachgeschaltet ist. Bei dieser Ausführungsform, die auch als Überlauf-Klappen-Ventil bezeichnet wird, sorgt der Überlauf für eine thermische Trennung, da die Fluide nur dann in Kontakt sind, wenn der Überlauf-Spiegel überschritten wird

Elektrische Energie lässt sich mit einer Anlage zur Wärmeerzeugung, wie beschrieben, erzeugen, wenn als Wärmeverbraucher Turbinen mit Generatoren zur Stromerzeugung angeschlossen sind. Hierbei kann es sich um Flüssigkeitsturbinen und/oder Dampf- bzw. Luft-Turbinen handeln, je nachdem, ob das Wärmetransportfluid flüssig oder als Dampf vorliegt.

Vorzugsweise handelt es sich bei mindestens einer Turbine um eine Flüssigkeitsturbine mit 15°-Düse.

Falls das Wärmetransportfluid in signifikantem Umfang verdampft, ist es vorteilhaft, wenn an der mindestens einen Rückführungsleitung mindestens ein Kondensator vorhanden ist. Der Kondensatoren ist hinter der ggf. vorhandenen Turbine bzw. anderen Verbrauchern angeordnet. Vorzugsweise ist der Kondensator so ausgeführt, dass seine Abluft ebenfalls rückgeführt wird.

Besonders gut lässt sich die beschriebene Anlage zur Wärmeerzeugung steuern, wenn zusätzlich eine steuerbare Wärmetransportfluidzufuhr am Reservoir für kaltes Wärmetransportfluid, eine Mehrzahl von Füllstandssensoren am Reservoir für kaltes Wärmetransportfluid und/oder am Reservoir für warmes Wärmetransportfluid, und ein Füllstandsregler zur Regelung mindestens eines Füllstands des Wärmetransportfluids in der Anlage mittels Steuerung der Wärmetransportfluidzufuhr in Abhängigkeit von den mittels der Füllstandssensoren gemessenen Füllständen vorhanden sind, ferner jeweils ein Temperatursensor am Reservoir für warmes Wärmetransportfluid und an jedem Brennpunktkörper des Wärmekollektors und eine Steuerung für den Füllstandsregler und die mindestens eine steuerbare Blendenvorrichtung. Damit kann z.B. eine Überlastungsabschaltung ermöglicht werden, z.B. durch einen Thermostat o.ä. am Brennpunktkörper, vorzugsweise geschützt durch einen Hitzeschild. Zudem kann bei Bedarf ein automatisches Nachfüllen von Wärmetransportfluid ermöglicht werden.

Zur Lösung der Aufgabe trägt auch ein Verfahren zur Steuerung einer beschriebenen Anlage zur Wärmeerzeugung bei, bei welchem die Logik des Verfahrens gemäß der Wahrheitstabelle in Tabelle 1 vorgegeben ist.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1    eine Seitenansicht eines Wärmekollektors;

Fig. 2    eine Darstellung einer Halterung mit optischen Fokussiereinrichtungen mit einer Blendenvorrichtung in Form einer zweiten Kuppel, wobei diese nur teilweise dargestellt ist;

Fig. 3    eine Darstellung einer Halterung mit optischen Fokussiereinrichtungen mit einer Blendenvorrichtung in Form einer zweiten Kuppel;

Fig. 4    eine Außenansicht einer Halterung mit optischen Fokussiereinrichtungen mit einer Blendenvorrichtung in Form einer zweiten Kuppel, wobei die Blenden geöffnet sind;

Fig. 5    eine Außenansicht einer Halterung mit optischen Fokussiereinrichtungen mit einer Blendenvorrichtung in Form einer zweiten Kuppel, wobei die Blenden geschlossen sind;

Fig. 6    eine Darstellung einer Halterung mit optischen Fokussiereinrichtungen ohne Blendenkuppel;

Fig. 7    eine schematische Darstellung der Einfallswinkel der Sonneneinstrahlung auf die Erde für einen Standort bei 50,1° nördlicher Breite;

Fig. 8    eine Darstellung einer Halterung mit optischen Fokussiereinrichtungen mit zusätzlichen äußeren Spiegeln;

Fig. 9    eine Außenansicht einer Halterung mit optischen Fokussiereinrichtungen mit zusätzlichen äußeren Spiegeln;

Fig. 10   eine Seitenansicht einer Anlage zur Wärmeerzeugung mit Turbinen und Kondensatoren mit Abluft-Rückführung;

Fig. 11   eine Draufsicht der Anlage aus Fig. 10;

Fig. 12   eine isometrische Schrägdarstellung der Anlage aus Fig. 10;

Fig. 13   eine Seitenansicht einer Anlage zur Wärmeerzeugung mit Turbinen und Kondensator ohne Abluft-Rückführung;

Fig. 14   eine Seitenansicht einer Anlage zur Wärmeerzeugung, bei der der Wärmekollektor auf dem Dach des Reservoirs für warmes Wärmetransportfluid angeordnet ist;

Fig. 15   eine Seitenansicht einer Anlage zur Wärmeerzeugung, bei der der Wärmekollektor auf dem Dach des Reservoirs für warmes Wärmetransportfluid angeordnet ist, mit Dampfturbine, aber ohne Flüssigkeitsturbine;

Fig. 16   eine perspektivische Darstellung einer Anlage zur Wärmeerzeugung, welche mit weiteren Kondensatoren erweiterbar ist;

Fig. 17   eine isometrische Schrägdarstellung einer Anlage zur Wärmeerzeugung mit einem Wärmekollektor, der unterhalb des Brennpunktkörpers einen Parabolspiegel aufweist;

Fig. 18   eine isometrische Schrägdarstellung einer Anlage zur Wärmeerzeugung, bei der Rohrleitungen mit Wannenparabolspiegeln versehen sind;

Fig. 19   eine Darstellung der Positionen der Schaltpunkte und Betriebsmittel einer Anlage zur Wärmeerzeugung;

Fig. 20   ein R&I-Fließschema einer Anlage zur Wärmeerzeugung;

Fig. 21   eine Anordnung einer Flüssigkeitsturbine mit 15°-Spritzdüse für eine Anlage zur Wärmeerzeugung;

Fig. 22   eine Anordnung einer Dampf-/Luft-Turbine mit Generator für eine Anlage zur Wärmeerzeugung;

Fig. 23   ein Kondensator für eine Anlage zur Wärmeerzeugung;

Fig. 24   eine Seitenansicht eines Überlauf-Klappen-Ventils für eine Anlage zur Wärmeerzeugung;

Fig. 25   eine Draufsicht des Überlauf-Klappen-Ventils gemäß Fig. 24;

Fig. 26   eine perspektivische Darstellung des Überlauf-Klappen-Ventils gemäß Fig. 24; und

Fig. 27   eine Seitenansicht einer anderen Ausführungsform eines Überlauf-Klappen-Ventils für eine Anlage zur Wärmeerzeugung.

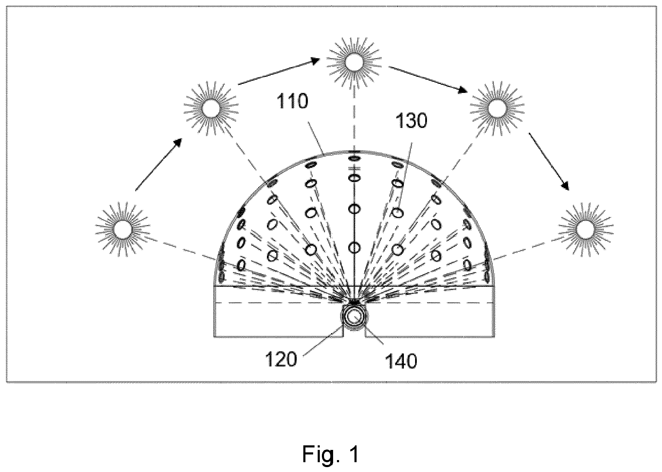

Fig. 1 zeigt einen Wärmekollektor, mit einer Halterung 110 und optischen Fokussiereinrichtungen 130 zur Gewinnung von Solarenergie. Diese hat die Form einer halbkugelförmigen Kuppel, in deren Mittelpunkt ein Brennpunktkörper 120 angeordnet ist. Die optischen Fokussiereinrichtungen 130 sind in diesem Fall als Brenngläser mit einer Brennweite, die dem Kuppelradius entspricht, ausgebildet. Da die Brennpunkte alle zusammenfallen, wird das einfallende Sonnenlicht dort gebündelt und erwärmt den Brennpunktkörper 120 und damit auch den dort befindlichen Durchfluss 140, z.B. ein Rohr, durch das ein Fluid strömen kann. Die optischen Fokussiereinrichtungen sind dabei so auf der halbkugelförmigen Kuppel angeordnet, dass für jeden Sonnenstand, der im Tagesverlauf angenommen wird (durch Pfeile angedeutet), Sonneneinstrahlung zum Brennpunktkörper 120 fokussiert werden kann.

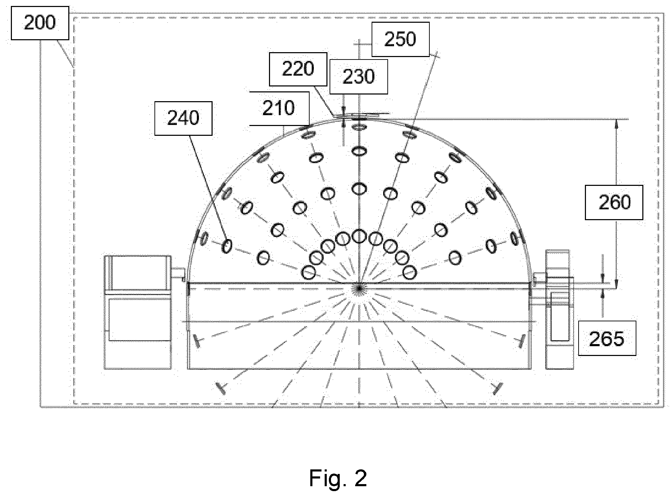

Figuren 2 bis 5 zeigen verschieden Darstellungen einer Halterung mit optischen Fokussiereinrichtungen 200, umfassend eine innere Kuppel 210 als eigentliche Halterung und eine Blendenvorrichtung in Form einer zweiten, äußeren Kuppel 220. Zwischen beiden Kuppeln befindet sich eine Lücke 230. Die innere Kuppel 210 ist um den Abststand 265 zwischen Brennpunkt und Kuppelboden reduziert. In Fig. 2 ist die äußere Kuppel 220 nur zu einem kleinen Teil dargestellt. Die Halterung an der inneren Kuppel 210 kann optische Fokussiereinrichtungen 240 mit einer Brennweite, die dem Kuppelradius 260 entspricht, aufnehmen. Dabei handelt es sich vorzugsweise um Brenngläser, besonders bevorzugt um Fresnel-Linsen. In der Ausführung gemäß Fig. 2 sind beispielsweise Positionen für 81 optische Fokussiereinrichtungen 240 vorgesehen, in 9 bogenförmigen Reihen zu je 9. Diese liegen jeweils um den Winkel 250 auseinander um beispielsweise die Nord-Süd-Achse der Kuppel herum angeordnet. Der Winkel 250 ergibt sich dabei zu 360° / n, wobei n die Anzahl optischer Fokussiereinrichtungen 240 ist, die in einer Reihe vorhanden wäre, wenn die Kuppel zu einer Kugel vervollständigt wäre. Im vorliegenden Beispiel ist n = 20.

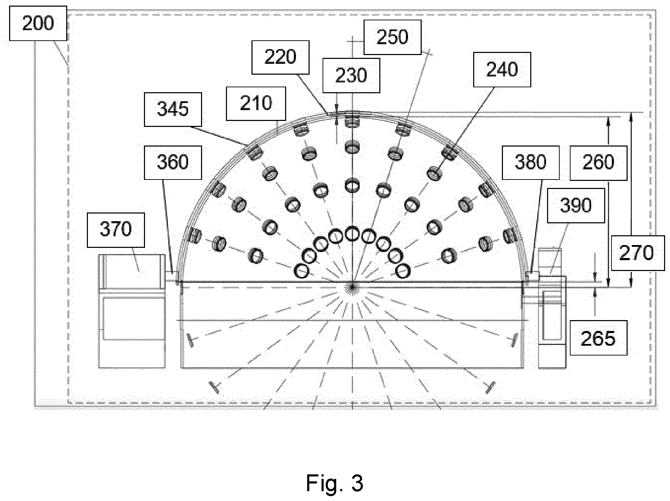

In Fig. 3 ist dieselbe Halterung 200 mit optischen Fokussiereinrichtungen dargestellt wie in Fig. 2, allerdings ist neben der inneren Kuppel 210 auch die im Abstand 230 angeordnete äußere Kuppel 220 vollständig dargestellt, welche die Funktion der Blendenvorrichtung übernimmt. Diese weist in geöffnetem Zustand, wie in Fig. 3 dargestellt, jeweils radial außerhalb der Positionen der optischen Fokussiereinrichtungen 240 Aussparungen 345 gleicher Größe auf. Die äußere Kuppel 220 ist mittels einer Achse bzw. eines Bolzens 360 mit einem Stellmotor 370 verbunden, an der gegenüberliegenden Seite mittels einer weiteren Achse bzw. eines Bolzens 380 mit einem Lager 390, z.B. einem Kugel- oder Rollenlager. Die Achse des Stellmotors 370 kann z.B. in Ost-West-Richtung orientiert sein. Typischerweise kann der Stellmotor die äußere Kuppel 220 um die Hälfte des Winkels 250 verschwenken, wodurch die optischen Fokussiereinrichtungen 240 bedeckt werden. Vorzugsweise ist der Stellmotor 370 derart arretierbar ausgeführt, dass die Kuppel 220 der Blendenvorrichtung im stromlosen Zustand in der geschlossenen Position arretiert wird. Dadurch kann eine unkontrollierte Erhitzung bzw. Überlastung am Brennpunkt vermieden werden.

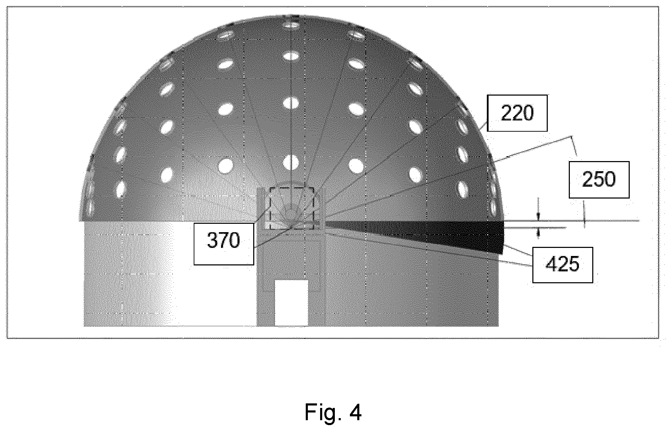

Fig. 4 zeigt eine Außenansicht einer Halterung mit optischen Fokussiereinrichtungen, z.B. aus der Ost-West-Perspektive. Zu sehen ist die äußere Kuppel 220 der Blendenvorrichtung. In dieser Ausführung ist sie um ein weiteres Kuppelsegment 425 über die Halbkugelform hinaus erweitert. Das Segment 425 umfasst dabei den halben Winkel 250. Hierzu muss der Abstand 230 zwischen den beiden Kuppeln 210, 220 ausreichend groß sein. Durch dieses zusätzliche Kuppelsegment kann sichergestellt werden, dass auch bei einer relativ dichten Besetzung der Halterung 200 mit optischen Fokussiereinrichtungen 240 diese alle durch die Blendenvorrichtung bedeckt werden, wenn die äußere Kuppel 220 durch den Stellmotor 370 verschwenkt wird.

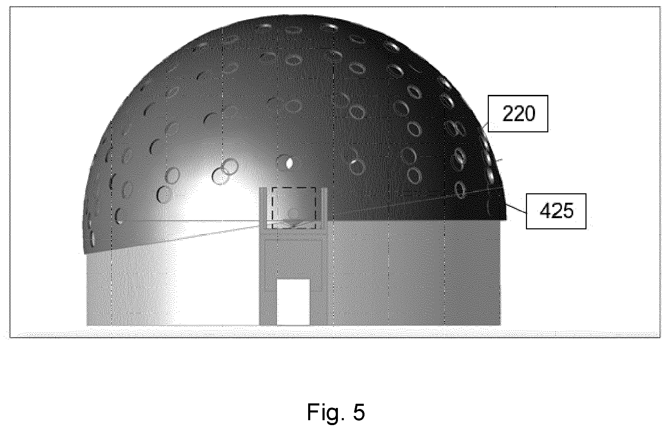

Dieser Zustand - Blendenvorrichtung geschlossen - ist in Fig. 5 dargestellt. Hier ist zu erkennen, dass ohne das zusätzliche Kuppelsegment 425 einige Fokussiereinrichtungen 240 am Rand der Kuppel eventuell nicht bedeckt wären.

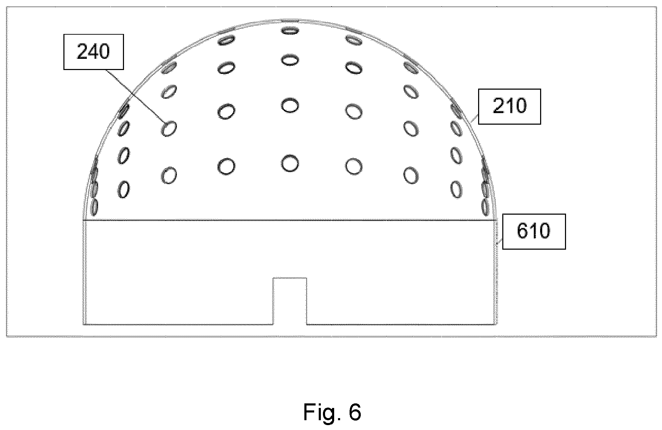

Fig. 6 zeigt eine Ausführung der Halterung mit optischen Fokussiereinrichtungen, welche nur eine Kuppel 210 aufweist, in der die optischen Fokussiereinrichtungen 240 montiert sind. Die schwenkbare äußere Kuppel mit Stellantrieb entfällt. Die Kuppel 210 kann beispielsweise auf einem zylindrischen Fuß bzw. Fundament 610 fest angeordnet sein. Als Blendenvorrichtung kann bei dieser Ausführung z.B. eine elektrochrome Folie zum Einsatz kommen, die zumindest die optischen Fokussiereinrichtungen 240 bedeckt und beim Anlegen einer Spannung transparent wird, spannungslos hingegen lichtundurchlässig ist. Bei einer solchen Ausführung gibt es keine beweglichen Teile, so dass mit weniger Wartungsaufwand zu rechnen ist.

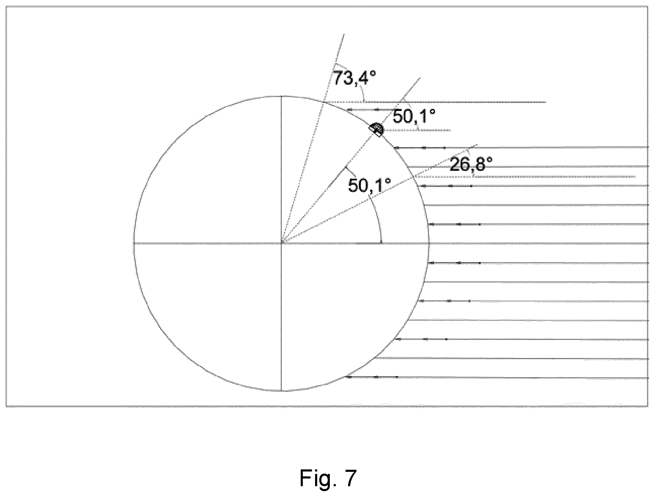

Die Rotationsachse der Erde ist um ca. 23,3° geneigt. Dadurch ergibt sich ortsspezifisch eine kontinuierliche Änderung des jeweiligen Einfallwinkels der Sonnenstrahlen im Laufe eines Jahres. An einem Ort, der sich beispielsweise bei 50,1° nördlicher Breite befindet, z.B. Frankfurt am Main (Deutschland), schwankt der Einfallwinkel zur Mittagszeit somit im Verlauf eines Jahres zwischen den Werten 73,4° am 21. Dezember und 26,8° am 21. Juli, was in Fig. 7 illustriert ist. Aufgrund dieses Umstandes kann es sinnvoll sein, auf der von der Sonne abgewandten Seite der Kuppel 210 Spiegel anzubringen, um die optischen Fokussiereinrichtungen 240 an der von der Sonne abgewandten Seite ebenfalls zu nutzen.

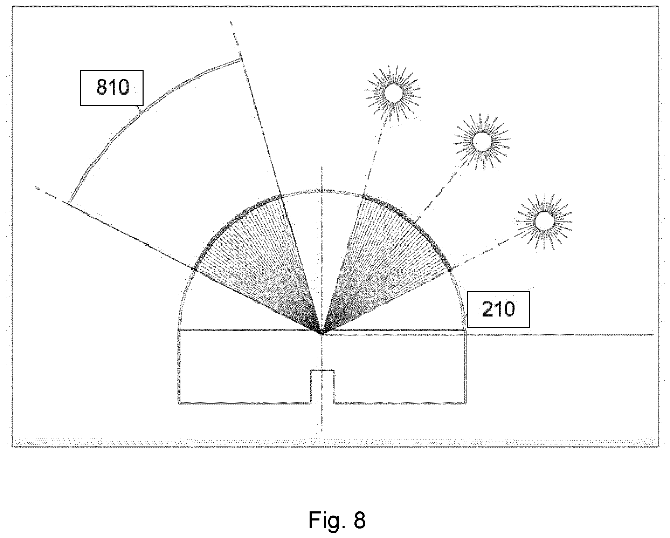

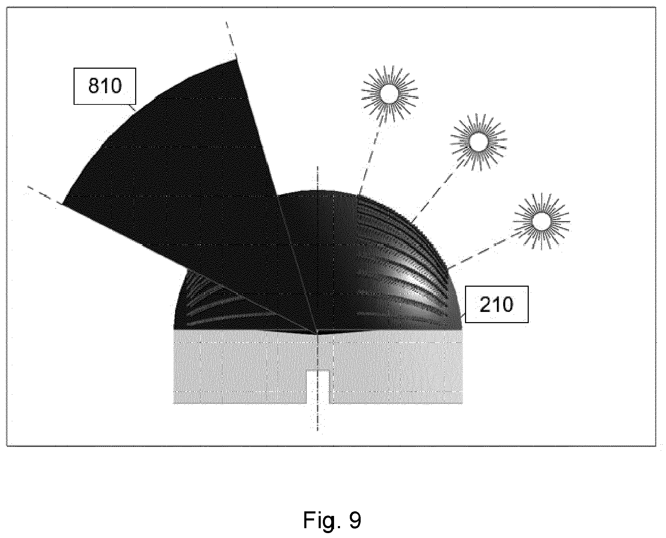

Eine solche Ausführungsform der Halterung mit optischen Fokussiereinrichtungen ist in Fig. 8 und Fig. 9 dargestellt. Dort sind Spiegel 810 vorgesehen, welche die Form eines Kugelsegments haben, wobei der Radius beispielsweise das Doppelte des Radius der Kuppel 210 sein kann. Diese Spiegel 810 werden auf der dem Sonnenstand gegenüberliegenden Seite der Kuppel angebracht, d.h. auf der Nordhalbkugel der Erde auf der Nordseite. Dadurch können auch die optischen Fokussiereinrichtungen auf der von der Sonne abgewandten Seite der Kuppel genutzt werden.

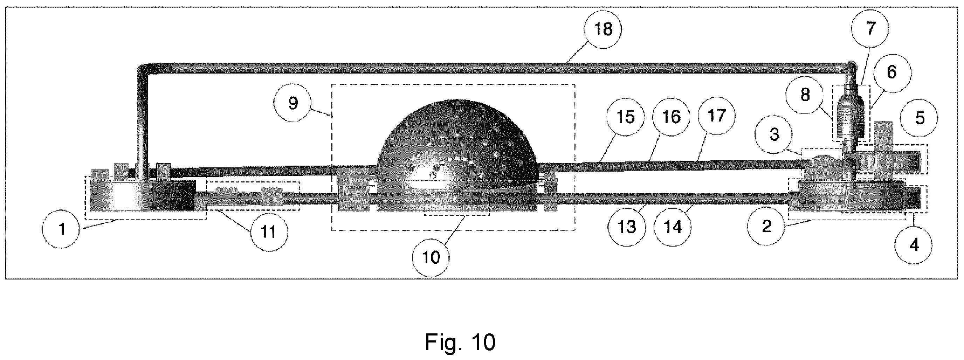

In den Figuren 10 bis 16 sind verschiedene Ausführungsformen einer Anlage zur Wärmeerzeugung dargestellt. Diese umfasst ein Reservoir 1 für kaltes Wärmetransportfluid, einen Wärmekollektor 9 mit Brennpunktkörper 10 und ein Reservoir 2 für warmes Wärmetransportfluid. Das Wärmetransportfluid strömt über geeignete Leitungen 13, 14 vom Reservoir für kaltes Wärmtransportfluid 1 durch den Brennpunktkörper 10 des Wärmekollektors 9, wo das Wärmetransportfluid erhitzt wird, zum Reservoir 2 für warmes Wärmetransportfluid. Dem Reservoir 2 für warmes Wärmetransportfluid nachgeschaltet sind Verbraucher, beispielsweise eine Flüssigkeitsturbine 4 und/oder eine Dampf-/Luft-Turbine 5. Am Eingang zum Reservoir 2 für warmes Wärmetransportfluid kann ebenfalls eine Flüssigkeitsturbine 3 angeordnet sein. Diese Turbinen treiben typischerweise Generatoren zur Stromerzeugung an. Stattdessen ist aber auch ein Anschluss an z.B. ein Fernwärmenetz als Verbraucher möglich. Ferner sind Rückführungsleitungen 15, 16, 17 vorhanden, die von den Wärmeverbrauchern zum Reservoir 1 für kaltes Wärmetransportfluid verlaufen. Die in den Figuren 10 (Seitenansicht), 11 (Draufsicht) und 12 (Schrägdarstellung) gezeigte Anlage weist zudem am Beginn der Rückführungsleitungen 15, 16, 17 Kondensatoren 6, 7, 8 auf, die mit einer Abluft-Rückführung 18 ausgestattet sind. Diese leitet die Abluft von den Kondensatoren 6, 7, 8 zum Reservoir 1 für kaltes Wärmetransportfluid. Somit kann der Fluidkreislauf in der Anlage hermetisch geschlossen sein, und es geht im normalen Betrieb kein Wärmetransportfluid verloren. Die Anlage verfügt außerdem über Überlauf-Klappen-Ventile 11, 12, welche dafür sorgen, dass das Wärmetransportfluid nur in die korrekte Betriebsrichtung der Anlage strömen kann und für eine thermische Trennung zwischen den warmen und den kalten Bereichen des Fluidkreislaufs der Anlage sorgen.

Es wird allgemein bevorzugt, dass alle Rohre und Anschlüsse der Anlage auf gleicher Höhe angeordnet sind und den gleichen Innen- sowie Außendurchmesser aufweisen. Dadurch wird der innere Strömungswiderstand der Anlage möglichst geringgehalten, außerdem lassen sich bei der Konstruktion Kosten einsparen.

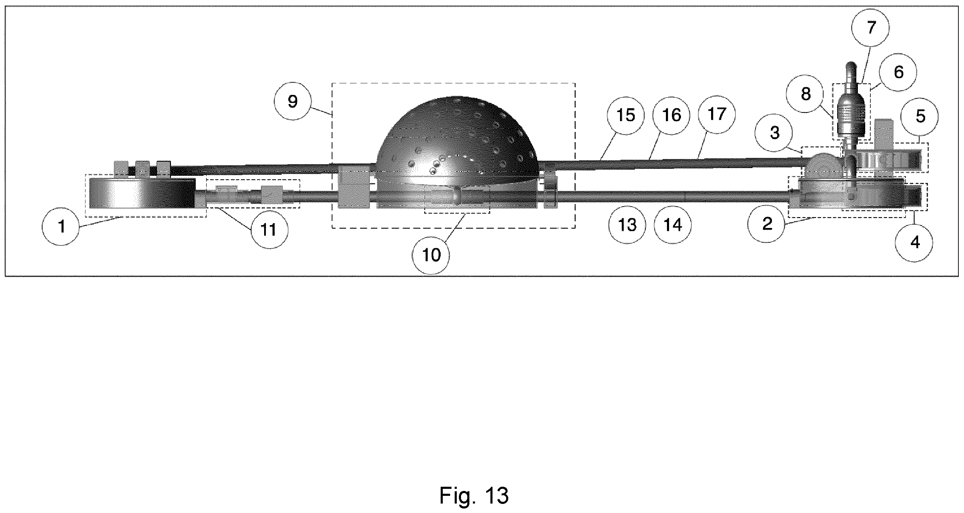

Fig. 13 zeigt eine Seitenansicht einer Variante der Anlage zur Wärmeerzeugung, bei der im Unterschied zur Ausführung gemäß Fig. 10 keine Abluft-Rückführung von den Kondensatoren 6, 7, 8 zum Reservoir 1 für kaltes Wärmetransportfluid vorgesehen ist. Es geht also im Betrieb über die Kondensator-Abluft Wärmetransportfluid verloren, welches regelmäßig nachgefüllt werden muss. Deshalb wären bei dieser Ausführungsform andere Wärmetransportfluide als Wasser weniger bevorzugt. Der Aufbau der Anlage ist dafür weniger komplex.

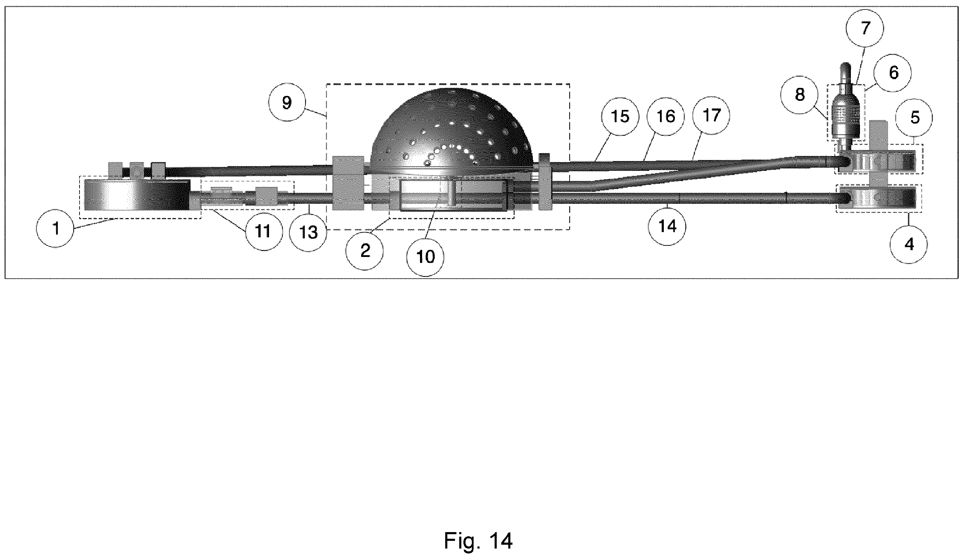

In Fig. 14 ist eine kompaktere Variante der Anlage dargestellt, bei der sich der Wärmekollektor 9 auf dem Dach des Reservoirs 2 für warmes Wärmetransportfluid befindet. Der Brennpunktkörper 10, in dem das Wärmetransportfluid erhitzt wird, ragt hierbei in das Reservoir 2 für warmes Wärmetransportfluid hinein und erhitzt dieses direkt. Eine Flüssigkeitsturbine 3 am Eingang des Reservoirs 2 für warmes Wärmetransportfluid entfällt naturgemäß bei dieser Ausführung.

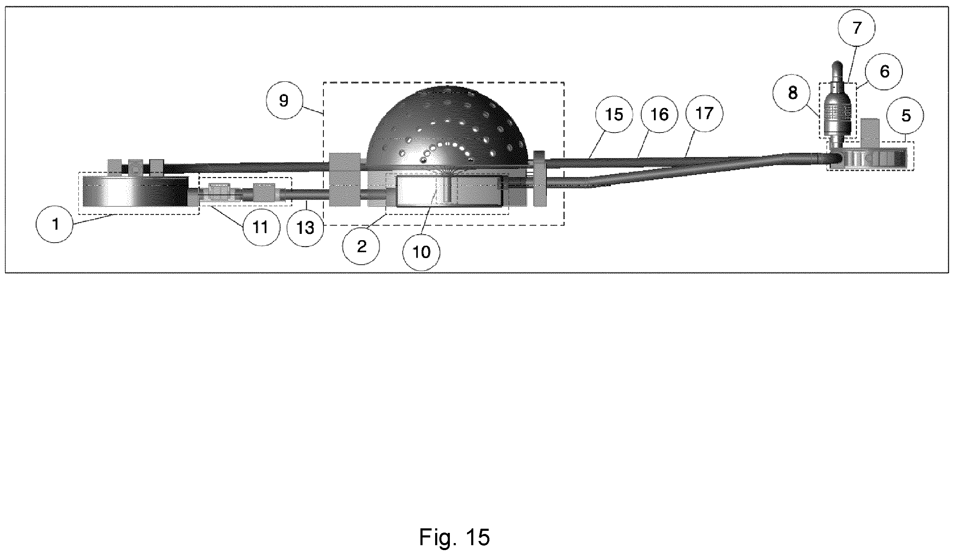

Bei der Ausführungsform der Anlage, die in Fig. 15 dargestellt ist, ist als Verbraucher nur eine Dampf- bzw. Luft-Turbine 5 vorgesehen. Es gibt also keine Flüssigkeitsturbinen. Diese Ausführungsform bietet sich an, wenn die Anlage für höhere Temperaturen und/oder niedrigeren Druck ausgelegt werden soll, so dass ein größerer Anteil des Wärmetransportfluids verdampft.

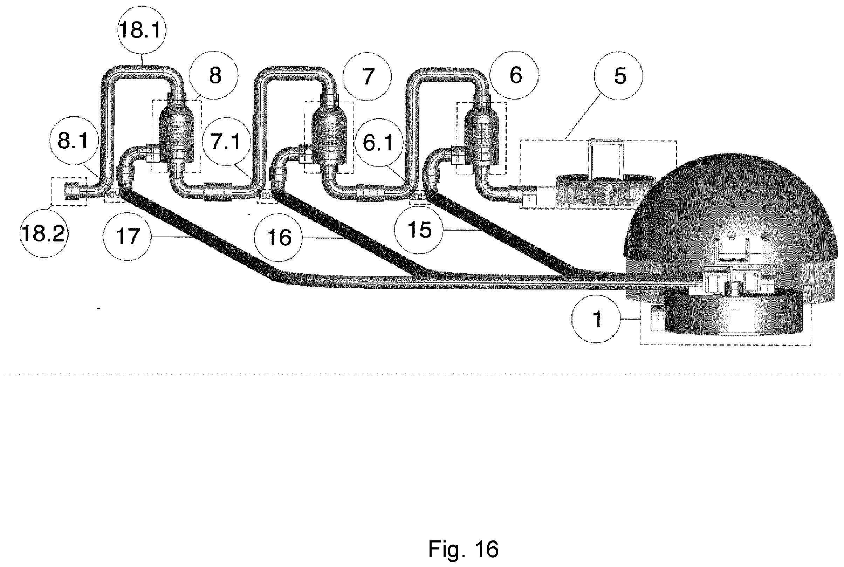

Fig. 16 zeigt eine Ausführungsform der Anlage zur Wärmeerzeugung, bei der die Kondensatoren 6, 7, 8 keine gesonderte Abluft-Rückführung aufweisen, der Fluidkreislauf aber dennoch hermetisch geschlossen sein kann. Dies wird erreicht, indem die Kondensatoren 6, 7, 8 in Reihe geschaltet werden und am Beginn der Rückführungsleitungen 15, 16, 17 Klappen 6.1, 7.1, 8.1 aufweisen. Der Dampfstrang 18.1 des letzten Kondensators 8 endet in einem Abschlussflansch 18.2, an den bei einer ggf. vorzunehmenden Erweiterung der Anlage weitere Kondensatoren angeschlossen werden können. Die Abluft des Kondensators 8 muss also über die Klappe 8.1 und die Rückführungsleitung 17 in das Reservoir 1 für kaltes Wärmetransportfluid entweichen.

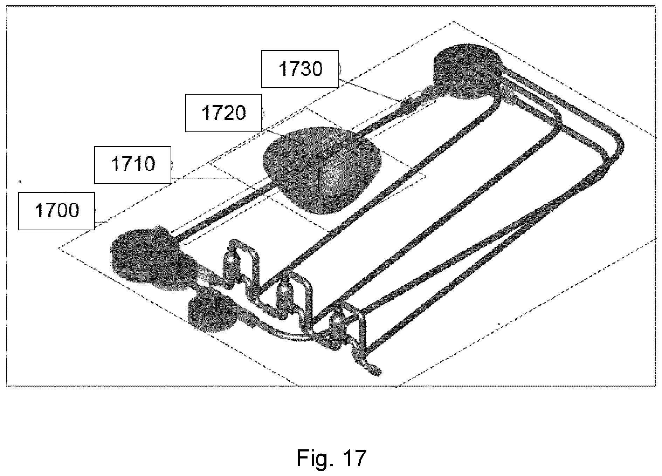

Bei der Ausführung der Anlage zur Wärmeerzeugung 1700 gemäß Fig. 17 ist an der Verbindungsleitung 1730 ein Wärmekollektor 1710 vorhanden, bei dem unter dem Brennpunktkörper 1720 ein Parabolspiegel in Schüsselform angeordnet ist.

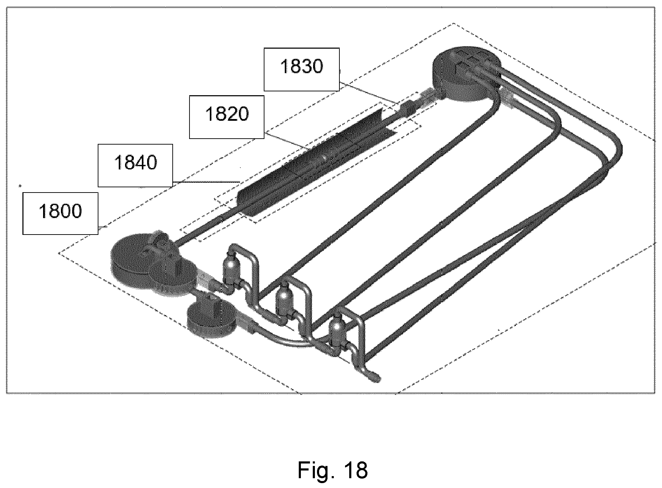

Die Ausführung der Anlage zur Wärmeerzeugung 1800, die in Fig. 18 dargestellt ist, weist hingegen entlang der Verbindungsleitung 1830, insbesondere im Bereich um den Brennpunktkörper 1820 herum, einen Wannenparabolspiegel 1840 auf. Diese Ausführungsform und die aus Fig. 17 sind jedoch wegen der zu erwartenden Verschmutzung der Spiegel weniger bevorzugt.

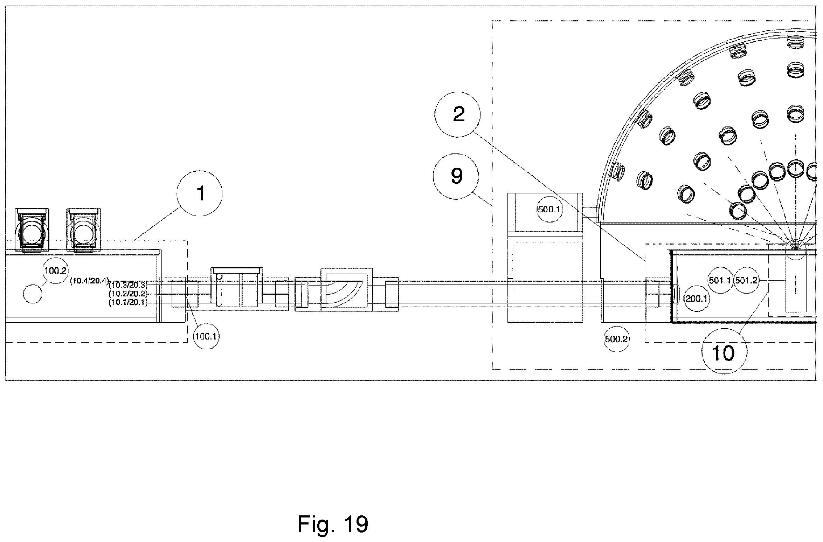

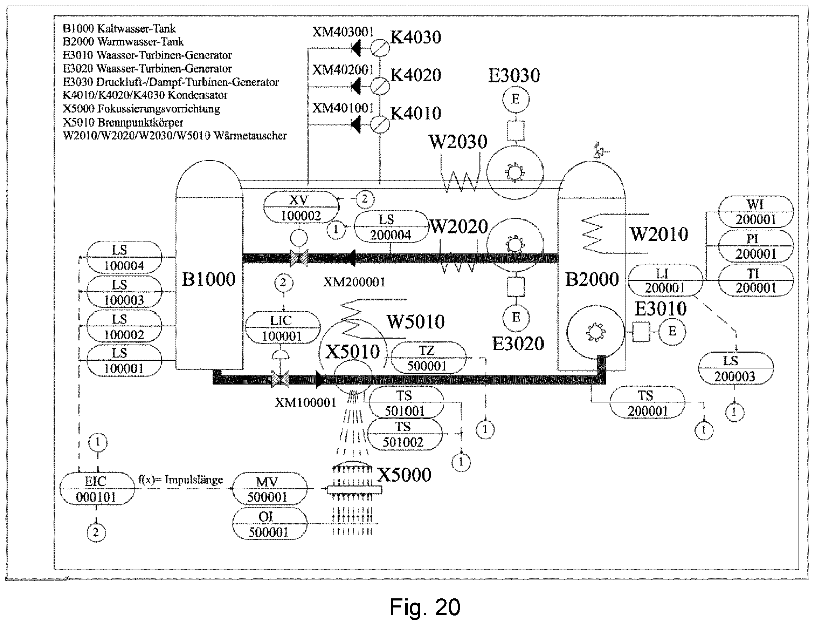

Fig. 20 ist ein R&I-Fließschema einer möglichen Ausführung einer Anlage zur Wärmeerzeugung, bei der als Wärmetransportfluid Wasser eingesetzt wird. In Fig. 19 sind die Positionen einiger Schaltpunkte und Betriebsmittel in einer teilweisen Seitenansicht einer solchen Anlage dargestellt. Der Betrieb einer Anlage mit diesem Schema kann z.B. mittels eines Logikbausteins geregelt werden, der gemäß einer Wahrheitstabelle funktioniert, wie sie in Tabelle 1 angegeben ist.

Nachdem das Reservoir 1 für kaltes Wärmetransportfluid befüllt wurde, wird der Füllstand mit dem Regler LC100001 geregelt, wobei die Regelung durch Temperatur-Schaltpunkte TS200001 am Eingang des Reservoirs 2 für warmes Wärmetransportfluid und TS501001 am Brennpunktkörper 10 bzw. X5010 freigegeben wird. Die beiden Reservoirs werden hier auch als Kaltwasserbehälter B1000 und Warmwasserbehälter B2000 bezeichnet. Der Füllstand LI200001 im Warmwasserbehälter B2000 kann hierbei mittels Wägemessung WI200001, Druckmessung PI200001 und Temperaturmessung TI200001 bestimmt werden. Nach Einschalten (Befehl EC000101.EIN) steuert die Logik EC000101 entsprechend den vorgesehenen Bedingungen den Stellantrieb 500.1 bzw. MV500001 der Blendenvorrichtung des Wärmekollektors 9 bzw. X5000. Mit der Wahrheitstabelle (Tabelle 1) ergeben sich folgende Ansteuerungen:

Regler LC100001 bzw. 100.1 Automatik setzen mit eingestellten Sollwert SV:
LC100001.AUT.SV.SV = EC000101.EIN.1 UND TS20001.1 UND TS50101.1
Regler LC100001 bzw. 100.1 Automatik setzen mit Sollwert SV = 0, d.h. fördert ständig Kaltwasser:
LC100001.AUT.SV.0 = TS501001.1 ODER TZ500001.1
Ein Magnetventil XV100002 bzw. 100.2 am Eingang des Kaltwasserbehälters 1 bzw. B1000 für den Rücklauf aus dem Warmwasserbehälter 2 bzw. B2000 wird angesteuert durch die Bedingungen:
XV100002.EIN = (EC000101.EIN.1 UND TS20001.1 UND TS50101.1 UND LS20003.1 UND LS200004.1 UND LS10003.0 UND LS100004.0) ODER TS501001.1 ODER TZ500001.1
Der Stellmotor MV500001 (500.1) für die Blendenvorrichtung des Wärmekollektors 9 bzw. X5000 wird folgendermaßen angesteuert:
MV500001.EIN = EC000101.EIN.1 UND TS20001.0 UND TS50101.0 UND LS20001.1 UND LS200002.1 UND LS100001.1 UND LS100001.1 UND TS501001.0 UND TZ500001.0 UND (LC100001.PV > SV*0,7)

Dabei bedeutet die letzte Bedingung, dass der Istwert größer als 0,7 Mal den Sollwert sein muss. Der Faktor 0,7 ist dabei beispielhaft vorgegeben, es kann selbstverständlich auch davon abgewichen werden.

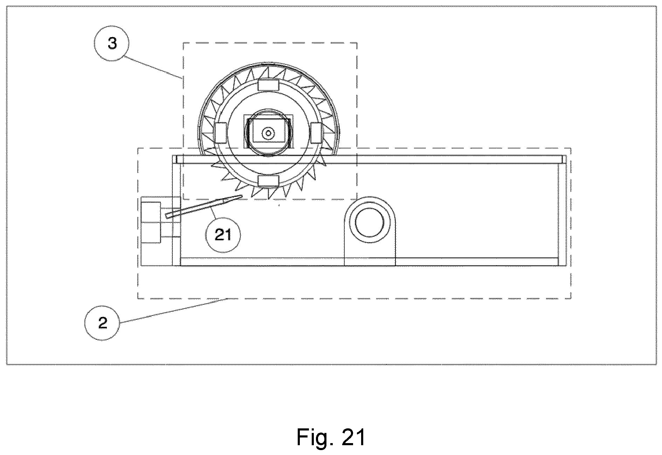

Fig. 21 zeigt eine mögliche Anordnung einer Flüssigkeitsturbine 3 am Eingang zum Reservoir 2 für warmes Wärmetransportfluid einer Anlage zur Wärmeerzeugung. Hierbei kommt eine 15°-Düse 21 zum Einsatz. Dabei handelt es sich um eine Spritzdüse, die in einem Winkel von 15° zur Horizontalen angeordnet ist, was sich als besonders vorteilhaft herausgestellt hat.

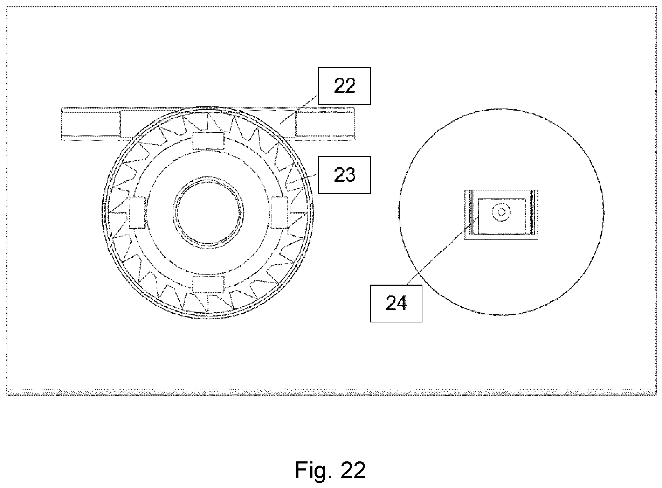

Im Fluidkreislauf hinter dem Reservoir 2 für warmes Wärmetransportfluid einer Anlage zur Wärmeerzeugung können als Verbraucher Fluidturbinen bzw. Dampf-/Luft-Turbinen angeordnet sein, wie in Fig. 22 dargestellt. Eine kurze Rohrleitung 22 dient als Anschluss, der das warme Wärmetransportfluid zur Schaufelradturbine 23 leitet, welche wahlweise für flüssiges oder für gasförmiges Fluid ausgelegt sein kann. Ferner ist ein Generator 24 zur Stromerzeugung mittels einer geeigneten Halterung mit der Turbine verbunden.

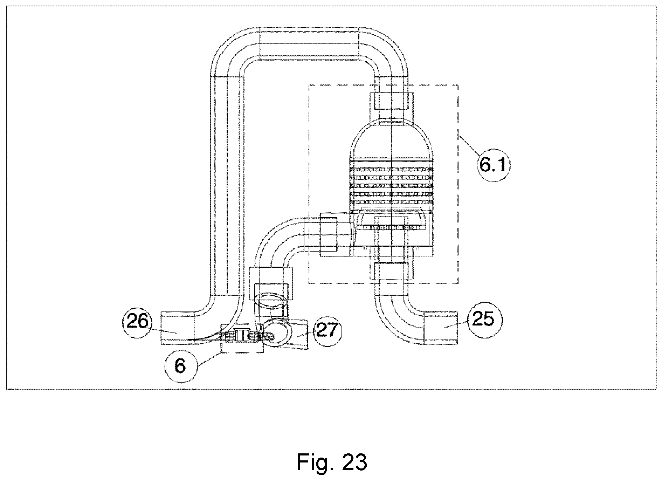

Im Fluidkreislauf einer Anlage zur Wärmeerzeugung sind hinter den Wärmeverbrauchern vorzugsweise Kondensatoren 6 angeordnet, wie in Fig. 23 dargestellt ist. Diese weisen vorzugsweise einen Dampfeingang 25, einen Dampfausgang 26 sowie eine Kondensatrückführung 27 auf, welche zusätzlich mit einer Klappe 6.1 ausgestattet ist.

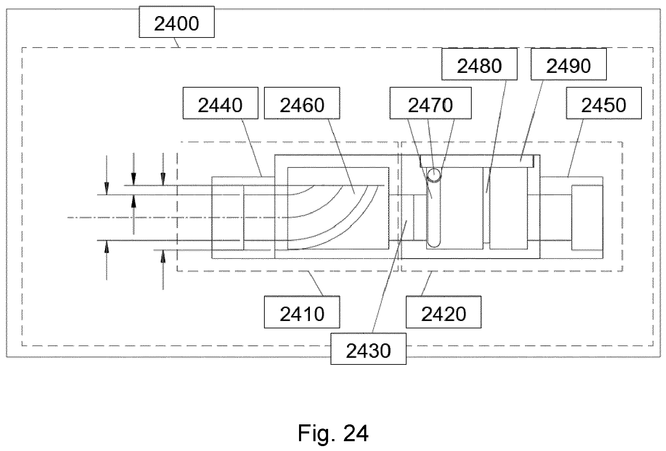

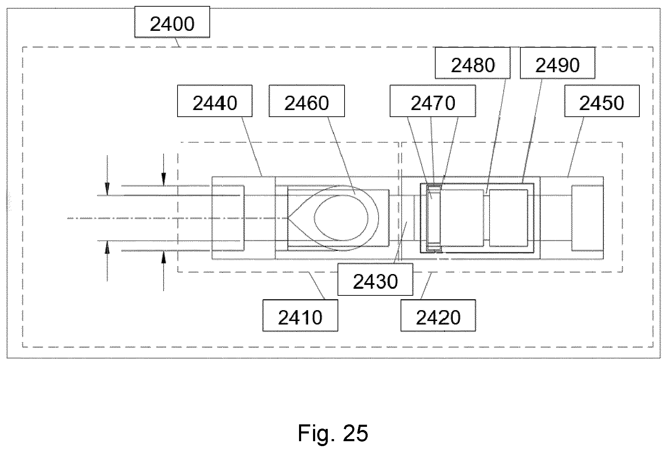

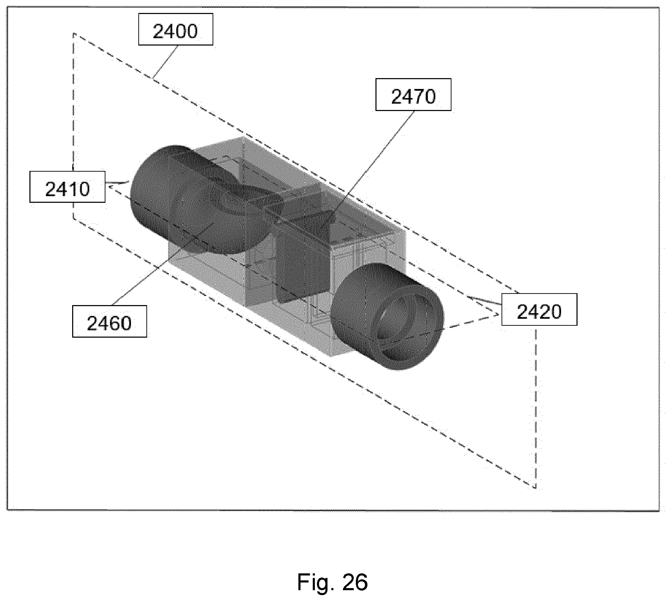

In den Figuren 24, 25 und 26 wird eine bevorzugte Ausführungsform eines Überlauf-Klappen-Ventils 2400 für eine Anlage zur Wärmeerzeugung in Seitenansicht, Draufsicht und perspektivischer Darstellung gezeigt. Das Überlauf-Klappen-Ventil besteht vorzugsweise aus einer ersten Kammer 2410 und einer zweiten Kammer 2420, die mit einer Öffnung 2430 verbunden sind, welche dem Rohrleitungsquerschnitt entspricht. Stromaufwärts der ersten Kammer 2410 befindet sich ein Eingangsstutzen 2440, stromabwärts der zweiten Kammer 2420 ein Ausgangsstutzen 2450. In der ersten Kammer 2410 ist ein aufwärts gekrümmtes Rohrsegment 2460 vorhanden, welches vorzugsweise wärmeisoliert ausgeführt ist und die Form eines Überlaufs hat. In der zweiten Kammer 2420 ist eine Klappe 2470 in Form einer Rückschlagsklappe schwenkbar aufgehängt. Diese sorgt dafür, dass ein Fluidstrom nur in eine Richtung möglich ist, da sie - in der Darstellung von Fig. 24 und 25 - nach rechts schwenken und die Öffnung 2430 freigeben kann, bei einer Strömung von rechts nach links jedoch die Öffnung verschließt. Eine Verengung 2480, die z.B. als U-Form aus Quadern ausgebildet sein kann, verhindert, dass sich die Klappe 2470 unerwünscht weit öffnet. Nach oben wird die zweite Kammer 2420 z.B. durch einen Deckel 2490 vorzugsweise permanent verschlossen. Ein solches Ventil hat eine Diodenfunktion, lässt eine Fluidstrom also nur in eine Richtung zu, und hat zusätzlich den Vorteil, für eine gute thermische Trennung zu sorgen: Das stromaufwärts befindliche Fluid ist nur beim Überlauf über das gekrümmte Rohrsegment 2460 mit dem stromabwärts befindlichen Fluid in Kontakt.

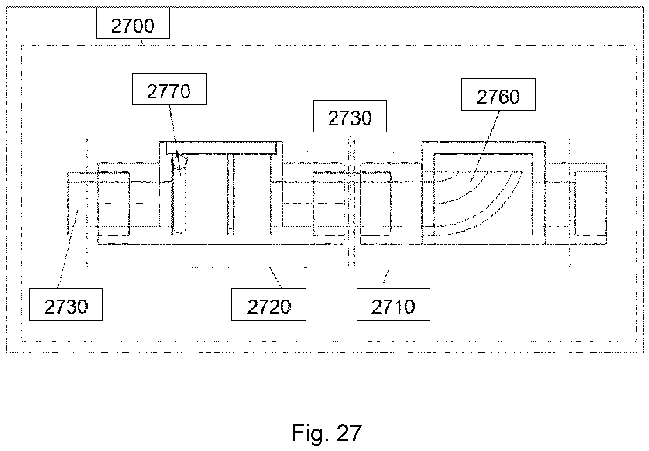

Fig. 27 zeigt eine Seitenansicht einer anderen Ausführungsform eines Überlauf-Klappen-Ventils 2700. Bei dieser Ausführung ist die Reihenfolge der Komponenten vertauscht. Die zweite Kammer 2720 mit der Rückschlagsklappe 2770 befindet sich stromaufwärts der ersten Kammer 2710 mit dem gekrümmten Rohrsegment 2760, das wiederum als Überlauf ausgebildet ist. Die Kammern 2710, 2720 sind hierbei vorzugsweise modular ausgebildet, d.h. mit gleichartigen Anschlüssen, so dass sie mittels eines kurzen Rohrsegments 2730 miteinander verbunden werden können. Hierdurch lassen sich beliebig viele derartige Kammern 2710, 2720 miteinander verbinden.

Folgende Ausführungen könnten ggf. zum weiteren Verständnis der Erfindung beitragen:
Wasser-Zirkulations-Energie-Generator WZEG

Funktionsbeschreibung

Der WZEG ist ein Generator. Es generiert Elektrische und Wärme-Energie. Die Energiequelle ist fokussiertes (Sonnen-) Licht. Das Licht wird vor dem Fokussieren mit Blenden versehen und auf ein Brennpunkt gerichtet. Das fokussierte Licht wird frequentiert freigegeben bis die ideale Temperatur am Brennpunt erreicht ist. Am Brennpunkt entsteht Hitze und Druck. Das Medium (Wasser) dehnt sich in eine Richtung, dieses wird durch Rückschlagventile nach dem Tesla-Prinzip realisiert. Es entsteht ein Wasserkreislauf. Die kinetische Energie des Wassers wird über Wasser-Turbinen abgeschöpft. Die kinetische Energie der Druckluft wird über Luft-Turbinen abgeschöpft. Bis auf die Druckluftöffnung (Sicherheit) ist es ein hermetischer Kreislauf.

Konstuktions Bestandteile:

1 Kaltwasser-Tank
1 Warmwasser-Tank
2 Tesla-Ventile (Rückschlag-Ventile)
1 Fokussierungsvorrichtung mit Blenden und Taktung
1 Glaskugel (Hohl mit diagonalen Rohr-Öffnungen aus Panzerglas) / Brennpunktkörper
1 Licht-/Hitze-Schild hinter der Brennweite (Brennpunktkörper)
1 Wasser-Pendel-Leitung mit Barriere Warm-/Kalt-Wasser
1 Barriere (Warm-/Kalt-Wasser)
1 Luft-Pendel-Leitung mit Kondensat Barriere-Kammer
1 Barriere (Luft/Wasser)Kondensat-Abscheider
2 E-Generatoren mit Wechsel-/Frequenz-Umrichter
3 Wärme-Tauscher

Ablauf:

1.) Beide Warm-/Kalt-Wasserbehälter und Pendelleitungen sind bis zum Arbeits-Level gefüllt. Der Brennpunktkörper X0010 wird über eine Fokussierungs-Apparatur impulsweise bis zum Erreichen der Betriebstemperatur aufgeheizt.
2.) Das Wasser wird im Brennpunktkörper bis zur Verdampfung erhitzt. Durch die Tesla-Ventile wird das Wasser gezwungen sich im Warmwasserbehälter V0010 auszudehnen. Das heiße Wasser wird über eine 15° Düse am Ende des Rohres, als Strahl in die Wasser-Turbine E0010 in den Warmwasserbehälter weitergeleitet.
3.) Der entstandene Überdruck wird über eine Luft-Turbine E0011 in der Pendelleitung vom Warm-Wasserbehälter V0010 nach V0011 ausgeglichen. Das entstandene Kondensat wird ebenfalls in den Kaltwasserbehälter V0011 rückgeführt.
4.) Das verdrängte Volumen wird vom Kaltwasserbehälter nachgefüllt und erneut wird der Brennpunktkörper X0010 auf Betriebstemperatur gebracht. Das überschüssige Volumen wird nach Wärmeaustausch vom Warmwasserbehälter über eine Barriere in den Kaltwasserbehälter rückgeführt.
5.) Nach stetiger Abfuhr der Wärme durch Wärmetauscher, stellt sich eine max. Temperatur von 110°C im Wärmebehälter und 60°C im Kaltwasserbehälter ein. In Beiden Behältern herrscht Überdruck. Der bei der Expansion entstandene Überdruck wird bei der Kondensierung kompensiert.
6.) Nach Abstellen der Anlage stellt sich nach Abkühlung der Atmosphärendruck wieder ein.

Fokussierungsvorrichtung mit Blenden und Taktung:

Die Regelung der Temperatur am Brennpunktkörper mit Sonnenlicht wird mit Blenden die vor der Fokussierung bestückt sind geregelt. Die Blenden können sowohl elektro-mechanisch als als auch in Folien-Form elektrisch angesteuert werden. Die Regelung der Temperatur am Brennpunktkörper mit künstlichem Licht wird durch die vorbestimmte Intensität der Lichtquelle selbst geregelt. Am Hitzeschild hinter dem Brennpunktkörper befindet sich ein Bimetall, welches ein Einschalten oder das Betreiben im kritischen Zustand verhindert (Schutz). Kritische Füllstände führen ebenfalls zum Abschalten der Anlage. Die internen Drücke und Temperaturen, bestimmen die erforderliche Lichtintensität bzw. Lichtdauer.

Verwendungszweck:

Groß-Kraftwerk mit 10 m$^3$ bis 100 m$^3$ Behältern.

Heim-Kraftwerk mit 0,01 m$^3$ bis 1 m$^3$ Behältern.

Nur Fernwärme: Erzeugte elektrische Energie für Pumpen der Fernwärme ins Netz verwenden.

Nur Heimwärme: Erzeugte elektrische Energie für Pumpen in das Haus-Wärme-Netz verwenden.

Der Wasser-Zirkulations-Energie-Generator WZEG mit folgenden Merkmalen, er besteht aus,

Vorrichtung:

1 Kaltwasserbehälter B1000 (lt. Beschreibung: V0011)

2 Warmwasserbehälter B2000 (lt. Beschreibung: V0010)

3 Wasserturbine E3010 auf dem Warmwasserbehälter (lt. Beschreibung: E0010)

4 Wasserturbine E3020 hinter dem Warmwasserbehälter

5 Luft-/Dampfturbine E3030 hinter dem Warmwasserbehälter (lt. Beschreibung: E0011)

6 Anzahl Kondensatoren K4010, K4020, K4030

7 Anzahl Tesla-Klappen-Kammern XM100001, XM200001 (lt. Beschreibung: Barriere (Warm-/Kalt-Wasser) und Tesla-Ventile (Rückschlag-Ventile))

8 Fokussierungsvorrichtung mit Blenden und Taktung X5000

9 Brennpunktkörper X5010 (lt. Beschreibung: X0010)

10 Externe Energiezufuhr

Verfahren:

11 Logik-Funktionsbaustein EC000101 für den Wasser-Zirkulations-Energie-Generator WZEG

11.1 schaltet mit dem Signal Befehl EC000101.EIN Betrieb Ein

11.2 triggert die Füllstands-Regelung LC100001 für den Kaltwasserbehälter B1000 an

11.2.1 Füllstands-Regelung LC100001 mit Regelsinn: Direkt

11.3 steuert das Magnetventi XV100002 Kaltwassereingang B1000 aus Warmwasser B2000

11.4 steuert den Stellmotor MV500001 der Fokussierungsvorrichtung X5000 an ist dadurch gekennzeichnet, dass er

12 Wärmeaustauschfläche am B2000 Warmwasserbehälterboden erzeugt.

12.1 Wärmeaustauschfläche am B2000 Warmwasserbehälter-Wasserabgangsleitung erzeugt.

12.2 Wärmeaustauschfläche am B2000 Warmwasserbehälter-Dampfabgangsleitung erzeugt.

12.3 Wärmeaustauschfläche am X5010 Brennpunktkörper erzeugt.

13 mit der Wasserturbine E3010 auf dem B2000, kinetische Energie aus der 15° Düse zur Umwandlung in elektrische Energie erzeugt,

13.1 mit der Wasserturbine E3020 hinter dem B2000 kinetische Energie zur Umwandlung in elektrische Energie erzeugt,

13.2 mit der Luft-/Dampf-Turbine E3030 hinter dem B2000 kinetische Energien zur Umwandlung in elektrische Energie erzeugt,

14 mit der Anzahl Kondensatoren K4010, K4020, K4030 hinter der Luft-/Dampf-Turbine E3020 den Dampf abkühlt,

14.1 den entstandenen Kondensat in dem Prozess rückführt,

15 mit der Anzahl Tesla-Klappen-Kammern XM100001, XM200001, eine Barriere zwischen Warm-Kaltwasser bildet,

15.1 den Wasserkreislauf in eine Richtung zwingt,

16 dessen Brennpunktkörper X5010,

16.1 eine beliebige Form haben kann,

16.2 hitzebeständig ist,

16.3 wärmeleitend ist,

17 für das Betreiben mit allen zur Dampferzeugung geeigneten Flüssigkeiten möglich ist,

17. 1 mit externen Energiequellen ohne der Sonne möglich ist.

Verfahren:

18 mit der Regelung LC100001, aus dem Kaltwasserbehälter B1000 dem Kreislauf nach Freigabe die erforderliche Menge kontrolliert zuführt,

18.1 einen Temperatur-Kurzschluss zwischen Warm- und Kalt-Wasser vermeidet.

19 mit dem Logik-Funktionsbaustein EC000101 für den Wasser-Zirkulations-Energie-Generator WZEG die Regelung LC100001 dem Kaltwasserbehälter B1000 in Automatik ansteuert,

19.1 die Temperatur am Warmwasserbehälter B2000 überwacht,

19.2 die Temperatur am Brennpunktkörper X5010 überwacht,

19.3 die Temperatur an der Fokussiervorrichtung X5000 überwacht,

19.4 den Stellmotor MV500001 der Fokussiervorrichtung X5000 ansteuert.

Die Fokussierungsvorrichtung mit Blenden und Taktung X5000 mit folgenden Merkmalen, sie besteht aus,

Vorrichtung:

1 einer inneren abgeschnittenen Kreis-Kuppel dem Fokussierer,

1.1 in der Kuppel sind gleichmäßig im Winkel AlphaBr radial eine Anzahl Brenngläser eingebettet,

1.2 alle Brenngläser haben die gleiche Brennweite,

1.3 der Radius Rm1 der Kuppel = Brennweite der Brenngläser,

1.3.1 die Kuppel hat eine Kuppelmanteldicke Hd1,

1.4 die Mitte der Brennglasdicke liegt als Tangente auf dem Radius Rm1 der Kuppel,

1.5 die Kuppel ist im unteren Bereich um eine Höhe Hs abgeschnitten,

1.5.1 so dass der Brennpunkt aller Brenngläser um die Höhe Hs unterhalb der Kuppel sich treffend befindet,

1.6 die Kuppel ist auf einer Zylinderwand befestigt,

1.6.1 der Radius der Zylinderwand entspricht dem Radius Rs der abgeschnittenen Kuppel am Schnitt,

1.7 unmittelbar am Brennpunkt befindet sich der Brennpunktkörper,

1.7.1 am Brennpunktkörper die Temperaturmessung TS501001 erlaubte Betiebstempemperatur erreicht sich befindet,

1.7.1 am Brennpunktkörper befindet sich die Temperaturmessung TS501002 kritische Betiebstempemperatur erreicht sich befindet,

1.7.2 unter dem Brennpunktkörper die Bimetall-Temperaturmessung TZ500001 sich befindet,

1.8 Nur für Variante 2: Die Kuppel mit Elektrochrome Folie überspannt ist,

1.8.1 Nur für Variante 2: die beim anlegen von Spannung transparent wird,

1.8.2 Nur für Variante 2: die Spannungslos lichtundurchlässig wird.

2 einer äußeren abgeschnittenen Kreis-Kuppel der Blende,

2.1 die Kuppel ist um H1 über der inneren Kuppel positioniert,

2.1.1 die Kuppel hat den Radius Ra = Ri + 0,5*Hri + H1

2.1.2 die Kuppel hat eine Wandbreite Hra

2.2 die Kuppel ist mit Aussparungen versehen,

2.2.1 mit dem gleichen Muster der Brennglaspositionen der inneren Kuppel

2.2.2 durch jede Aussparungsmitte verläuft die Brennpunktlinie des jeweiligen Brennglases

2.3 die Kuppel ist mit diagonal zueinander angebrachten 2 Halterungsbolzen versehen,

2.3.1 der erste Halterungsbolzen liegt als Achse in einem Kugellager,

2.3.2 der zweite Halterungsbolzen liegt als Achse an einem Rechts-/Links-Stell-Motor,

2.4 der Rechts-/Links-Stell-Motor schwenkt die Kuppel um den Winkel AlphaSt,

2.4.1 der Winkel AlphaSt = 0,5* Winkel AlphaBr,

2.4.2 die Kuppel an der Einschaltseite um den Winkel Winkel AlphaSt in Erweiterung angebaut ist,

2.5 die Kuppel an der Ausschaltseite mit einem Gewicht M versehen ist,

2.5.1 Das Gewicht M = Gewicht bei stromlos die Kuppel auf die Ausschaltposition bringt,

3. die Logik-Funktion XC500001 den Rechts-/Links-Stell-Motor um den Winkel AlphaSt steuert,

3.1 die Logik-Funktion XC500001 die Elektrochrom Folie steuert,

4. Nur für Variante 3: Spiegel an sonnenabgewandten Seite angebaut ist,

5. Nur für Variante 4: Zur sonnenabgewandten Seite verspiegelte größere transparente Kuppel angebaut ist,

6. Nur für Variante 5: Zusätzliche Vorrichtung für Brenngläser für Brennpunktkorrektur angebaut ist.

ist dadurch gekennzeichnet, dass sie

Vorrichtung:

7. eine Wärmeaustauschfläche an ihrem Brennpunktkörper erzeugt,
8. Stromlos die Blende Kuppel sich selbst schliesst,
9. eine kontrollierte Öffnung der Blende ermöglicht,
9.1 eine Überhitzung am und um den Brennpunktkörper vermeidet.

Die Tesla-Klappen-Kammer XM100001 oder XM200001 mit folgenden Merkmalen, sie besteht aus,

Vorrichtung:

1 einer länglichen Kammer,
1.1 an ihren beiden Enden mit Anschlussstutzen für Rohre mit gleichem Durchmesser versehen,
1.2 in eine Seite ist ein gekrümmtes abgeschnittenes Rohr eingelegt,
1.2.1 mit geringer Wärmeleitfähigkeit Eigenschaft,
1.2.1 die gekrümmte abgeschnittene Seite zeigt nach oben,
1.3.1 der Schnitt ist in gleicher Höhe des Rohraußendurchmesser
1.4 hinter dem gekrümmten Rohr befindet sich eine Klappe

ist dadurch gekennzeichnet, dass sie

Vorrichtung:

4. eine Barriere-Überlauf der Höhe Hbr = Rohraußenradius - Rohrinnenradius bildet
5. Kontaktfläche warm/kalt minimiert.
6. Den Durchfluß nur in einer Richtung erlaubt

1. Der Wasser-Zirkulations-Energie-Generator WZEG

2.1 Den Prozess des Wasserkochens nach Möglichkeit mit nachhaltigen Resourcen optimal zu nutzen ist nach heutigem Stand der Technik in den Kraftwerken Aschalim in Israel, Noor in Marokko und das Solarturm Versuchskraftwerk Jülich, realisiert. Diese so genante Turmtechnologie arbeitet nach dem Prinzip, mit Hilfe von autonomen Spiegeln das Sonnenlicht auf einen Brennpunkt zu fokussieren, welches die Energie für den Prozess liefert. Die thermische Energie am Brennpunktkörper wird nicht für Fernwärme genutzt. Die thermische Energie am Brennpunktkörper wird ausschließlich mit Hilfe der Dampferzeugung in elektrische Energie umgewandelt. Es hat keine Ersatzeinspeisung, braucht eine Fläche wie ca. 1,14 km * 1,14 km für einen Turm der Höhe 265 m lt. Dokument Seite 15 PDF https://juser.fz-juelich.de/record/858141/files/Jül 2975_Krug.pdf. Der flüssige Aggregatzustand, dessen Verhalten in punkto Wärmespeicherung, Ausdehnung und deren Effektes sind ungenutzt. Die Skalierungsmöglichkeit also die Maße des Kraftwerktyps liegt heute bei einer Turmh öhe von ca. 65m - 265m.

2.2 Im Prozess mit dem Wasser-Zirkulations-Energie-Generator WZEG befindet sich der Brennpunktkörper (10) unterhalb einer Kuppel (9) welches mit gleichmäßig verteilten Brenngläsern der gleichen Brennweite versehen ist. Das Rohr (14) für den Prozess verläuft am Brennpunk durch den Brennpunktkörper (10)

Der Prozess läuft im Wasser-Zirkulations-Energie-Generator WZEG E0001 plan ab, auf der Horizontalen befinden sich alle Rohre und Stutzen auf gleicher Höhe. Alle Rohre und Stutzen haben den gleichen Innen-Durchmesser. Alle Rohre haben den gleichen Außen- Durchmesser.

Der Kaltwasserbehälter B1000 (1), der Warmwasserbehälter B2000 (2), die Wasserturbine E3010 (3) für Spritzdüse , die Wasserturbine E3020 (4) hinter dem Warmwasserbehälter, die Dampfturbine E3030 (5), die Kondensatoren K4010 (6), K4020 (7), K4030 (8), Die Fokussierungsvorrichtung mit Blenden und Taktung X5000 (9), Der Brennpunktkörper X5010 (10), Die Tesla-Klappen- Kammern XM100001 (11), XM200001 (12), die Rohrleitungen: Kaltwasserbehälter B1000- B2000 (13), Warmwasser B2000-B1000 (14), die Kondensatrückführungen K4010-B1000 (15), K4020-B1000 (16), K4030-B1000 (17), die Kondensat-Abluft-Rückführung K4030-B1000 (18) können in folgenden Variationen angeordnet werden.

Verfahren Variante 1:

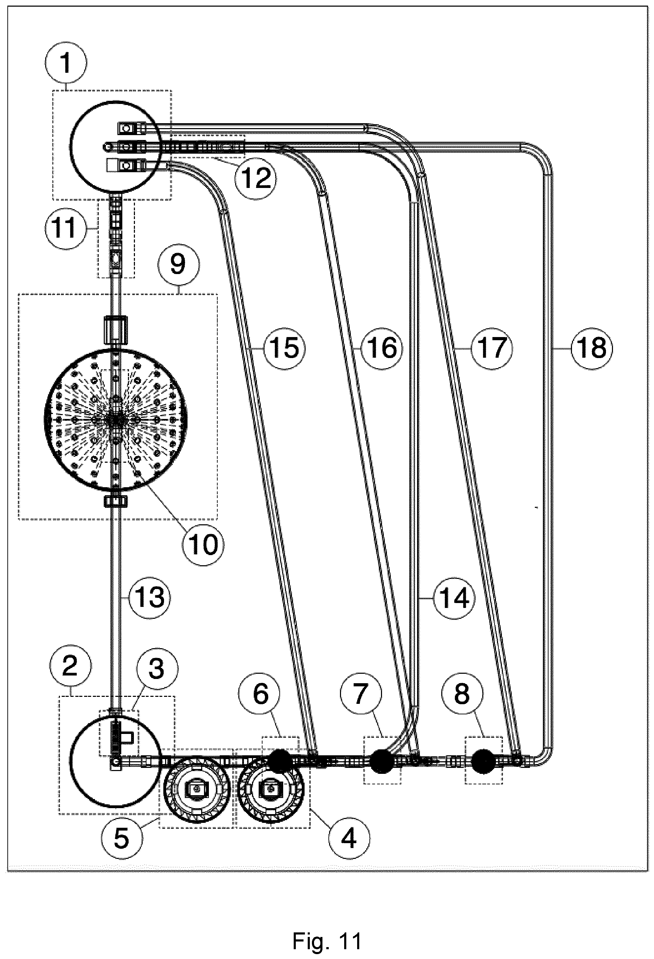

Logik-Baustein EC000101 für den Wasser-Zirkulations-Energie-Generator WZEG E0001: Der Kaltwasserbehälter B1000 (1) wird befüllt danach wird während des Prozesses der Füllstand mit dem Regler LC100001 stetig geregelt. Die Regelung wird freigegeben durch Temperatur-Schaltpunkte TS200001 am Eingang vom Warmwasserbehälter B2000 (2) und TS501001 am Brennpunktkörper X5010 (10). Der Füllstand LI200001 im Warmwasserbehäter B2000 (2)wird mit der Wägemessung WI200001, Druckmessung PI200001 und der Temperaturmessung TI200001 kalkuliert. Mit dem Betrieb Ein Befehl EC000101.EIN steuert die Logik EC000101 entsprechend den Bedingungen den Stellantrieb MV500001 (500.1) der Fokussiervorrichtung X5000 (9) an. In Abb.11 sind die Positionen und Bezeichnung der Betriebsmittel und Schaltpunkte dargestellt, der Schaltpunkt LS200004 (20.4) wird am Warmwassereingang vor dem Kaltwasserbehälter B1000 (1) mit einer Füllstands-Sonde detektiert.

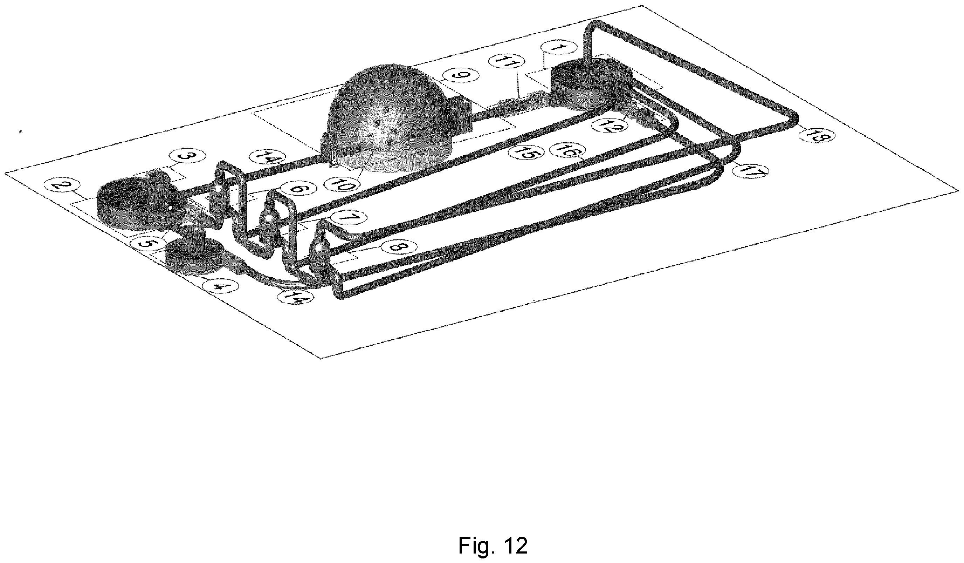

In Abb.12 ist die Wahrheitstabelle für den Logik-Funktionsbaustein EC000101 dargestellt. Daraus ergeben sich folgende Ansteuerungen als Anweisungsliste in englisch,

Regler LC100001 (100.1) Automatik Setzen mit eingestellten Sollwert SV:
LC100001.AUT.SV.SV = EC000101.EIN.1 and TS20001.1 and TS50101.1
Regler LC100001 (100.1) Automatik Setzen mit Sollwert SV = 0, fördert ständig Kaltwasser:
LC100001.AUT.SV.0 = TS501001.1 or TZ500001.1
Das Magnetil XV100002 (100.2) Kaltwasserbehältereingang B1000 (1), für Warmwasserrücklauf aus B2000 (2) , wird angesteuert durch Bedingungen:
XV100002.EIN = (EC000101.EIN.1 and TS20001.1 and TS50101.1 and LS20003.1 and LS200004.1 and LS10003.0 and LS100004.0) or TS501001.1 or TZ500001.1
Der Stellmotor MV500001 (500.1) für die Fokusiervorrichtung X5000 (9), wird angesteuert LC100001.PV>SV*ca.0,7, Istwert größer als ca.0,7 mal Sollwert und Bedingungen:
MV500001.EIN = EC000101.EIN.1 and TS20001.0 and TS50101.0 and LS20001.1 and LS200002.1 and LS100001.1 and LS100001.1 and TS501001.0 and TZ500001.0 and LC100001.PV>SV*ca.0,7

Verfahren Variante 2:

ohne Füllstandregelung und Ventile, nur mit hintereinander geschalteten Tesla- Kammern, die einen Wärmekurzschluss verhindern und den Durchfluß in eine Richtung zwingen

2.3 der Wasser-Zirkulations-Energie-Generator WZEG hat die folgenden Vorteile gegenüber der Turmtechnologie:

1.) Die weite Skalierbarkeit der Anlage abhängig der Kuppelhöhe;
2.) Er kann durch hinzufügen weiterer Fokussiervorrichtungen wie X5000 und Brennpunktkörpern wie X5010 in reihe oder parallel geschaltet erweitert werden;
3.) Er kann mit den Eigenschaften der Turmtechnologie indem es mit autonomen gewöhnlichen Spiegeln die auf die Brenngläser sind, kombiniert werden;
4.) Er kann mit Ersatzenergie, wie das Anlegen einer Spannung am Brennpunktkörper X5010 oder einer Mikrowelle entweder oder seiner gespeicherten Energie weiter betrieben werden.

Er kann aufgrund der genanten Vorteile in folgenden Beispielen eine Anwendung finden:

1.) Als Kraftwerk;
2.) Als Kraftwerk und Fern-Wärme-Erzeuger;
3.) Als Anbau zu vorhandenem Fern-Wärme-Netz zur Reduzierung des Energieverbrauchs und somit den Anteil des fossilen Energieverbrauchs vorhandener Anlagen;
4.) Als eine Dach-Konstruktion auf Gebäuden zur Energie- und Wärmegewinnung;
5.) Als eine im Garten auf einem Hügel befindliche Konstruktion zur Energie- und Wärmegewinnung;
6.) Als eine im Keller mit abgelenktem Licht betriebene Konstruktion zur Energie- und Wärmegewinnung.

1. Die Fokussierungsvorrichtung ein thermischer Energiegenerator mit der Erdwärme-Technologie zu vergleichen, welches die thermische Differenz entweder als Wärme- Energie speichert, weiterleitet oder in elektrische Energie wandelt.

2.1 Die Erdwärme wird als erneuerbare Energiequelle betrachtet, da sie unerschöpflich sei und keine Treibhausgase produziert. Erdwärme wird durch die Nutzung der natürlichen Wärme, die im Boden, in der Erde und im Wasser vorhanden ist, gewonnen. Sie kann durch geothermische Anlagen oder Wärmepumpen genutzt werden, um Wärme für die Heizung von Gebäuden oder zur Erzeugung von Strom zu nutzen. Die Nutzung von Erdwärme ist eine umweltfreundliche Alternative zu fossilen Brennstoffen wie Öl und Gas und trägt dazu bei, den Ausstoß von Treibhausgasen zu reduzieren. Die Größe und Tiefe der Bohrungen sind, in der Regel etwa 20 bis 30 cm im Durchmesser und reichen bis in eine Tiefe von etwa 100 bis 200 Metern oder noch tiefer je nach den geologischen Bedingungen und den spezifischen Anforderungen der Anlage. Für die Wärmeleitung werden in der Regel spezielle Wärmetauscher verwendet, die in der Bohrung installiert werden. Schätzungen für die Temperaturen, die unter der Erde in verschiedenen Tiefen herrschen könnten sind abhängig von der geologischen Beschaffenheit und die Lage wie die nähe von Vulkanen.

Auch wenn die Erdwärme als erneuerbare Energie als unerschöpflich betrachtet wird, ist Sie es nicht, sonst gäbe es heute noch tektonische Aktivitäten auf unserem Mond und dem Planeten Mars. Jeder radioaktive Prozess verliert aufgrund der Halbwertszeit seine Wirkung. Die Erde wird eines Tages nicht mehr geologisch Aktiv sein. Jede Entnahme der angesammelten und produzierenden Wärme aus dem Erdinneren führt zu einer höheren Verkrustungsgeschwindigkeit der Erde, insbesondere entlang der Plattentektonik.

2.2 Die Fokussierungsvorrichtung mit Blenden und Taktung X5000 (9;200)

Variante 1:

besteht aus 2 übereinander gestüllpten, um die Schnitthöhe Hs (265) abgeschnitten Kreis- Kuppeln mit einer Lücke H1 (230) zwischen Ihnen.

Die Innere Kuppel = Fokussier Kuppel (210) sitzt starr montiert auf einer Zylinderwand (610) , es sind gleichmäßig mit n im Winkel AlphaBr (250) = 360/n radial verteilte Ablageflächen (130) für Brenngläser (130) gleicher Brennweite Hbr (260) vorhanden, dem Mittelradius Rm1 (260) = Brennweite Hbr (260) in Tangente mit den Brenngläsern (130) dem Aussenradius Ra1 = Brennweite Hbr (260) + 0,5*Kuppelmanteldicke Hd1 dem Innenradius Ri1 = Brennweite Hbr (260) - 0,5*Kuppelmanteldicke Hd1.

Die äussere Kuppel = Blendenkuppel (220) mit der Kuppelmanteldicke Hd2 , der Lücke H1 (230), dem Mittelradius Rm2 (270) = innere Kuppel Mittelradius Rim1 (260) + Lücke H1 (230) + 0,5*Kuppelmanteldicke Hd2 dem Aussenradius Ra2 = Mittelradius Rm2 (270) + 0,5*Kuppelmanteldicke Hd2 dem Innenradius Ri2 = Mittelradius Rm2 (270) - 0,5*Kuppelmanteldicke Hd2 den Aussparungen (345) haben die gleiche Größe der Brenngläser (130) in Flucht zur Brennweite Hbr (260). an der Nord-Süd Achse mit dem Bolzen 1 (360) am Stellmotor (370), dem Bolzen 2 (380) am Kugellager (390) angebracht.

In Ost-West Richtung stellt der arretierbare Rechts-/Links-Stell-Motor (370) durch schwenken die äussere Kuppel (220) um den Winkel AlphaSt = 0,5* Winkel AlphaBr (240) die äussere Kuppel (220) ist an der Einschaltseite um den Winkel Winkel AlphaSt (24) von der Kuppelmitte (260) am Brennpunkt (260) geschnittenes und um die Schnitthöhe Hs (265) angehobenes Kuppelsegment (425) angebracht, dadurch werden beim schwenken die unterste Reihe Brenngläser mit verschlossen. Der arretierbare Rechts-/Links-Stell-Motor (370), arretiert im Stromlosen die äussere Kuppel (220) in den sicheren Blind-Zustand.

Variante 2:

Ohne äußere Kuppel (220), ohne arretierbaren Rechts-/Links-Stell-Motor (370), Die innere Kuppel (210) mit Elektrochrome Folie überspannt ist, die beim anlegen von Spannung transparent wird, die Spannungslos lichtundurchlässig wird.

Variante 3:

Zusätzliche Spiegel zur Optimierung, denn die Erde hat eine Rotationsachse Alpha0 = ca. 23,3° (23,27°). Dadurch ergibt sich Ortsspezifisch eine kontinuierliche Änderung des jeweiligen Einfallwinkels der Sonnenstrahlen.,z.B. der Ort Frankfurt am Main in Deutschland steht im Lot zur Erdmitte mit einem Winkel von Alpha1 = 50,1° zum Äquator, bedingt durch die Rotationsachse sind die Einfallswinkel am 21.12. der Winkel Alpha2 = 73,4° und am 21.06. der Winkel Alpha3 = 26,8°, im Jahr, die den Brennpunkt über die Brenngläser treffen. Dieser Umstand erlaubt es für Orte zwischen Äquator und den Polen, auf der zur Sonne abgewandten Seite der Kuppel Spiegel (810) anzubringen um die Rückseite zu nutzen. Das Jahr hat ca. 364,25 Tage, pro Tag abhängig der Tagesdauer Td ergibt den Winkel Alpha4 als kontinuierliche Änderung pro Tag . Die Erdrotationsachse Alpha0 wird 4 mal im Jahr durchlaufen. Der Winkelunterschied pro Tag Alpha4 ergibt die Formel.

$$Alpha4 = 4*Alpha0/(364,25\ T * Td )$$

Für den 21.03. und 21.09. als Beispiel mit einer Tagesdauer Td = 0,5 Tage

$$Alpha4 = 4*23,3° / (364,25 * 0,5) = 0,127934111187371°.$$

Variante 4:

Zusätzliche Kuppel zur Optimierung,

Eine 3. transparente Kuppel, mit Innenverglasung , dadurch werden die Sonnenstrahlen durch Reflexion über Brenngläser in den Brennpunkt gelenkt. Bietet zusätzlichen Schutz vor Wind und Wetter.

Variante 5:

Zusätzliche Vorrichtungen für Brenngläser zur Optimierung, bedingt durch die elliptische Erdumlaufbahn um die Sonne mit ca. min. 147,1 Mio Km und ca. max 152,1 Mio Km wird der Brennpunkt um einen Bereich sowohl in Höhe als auch in Weite wandern, welches ein Verlust von Effizienz bedeutet und zusätzliche Maßnahmen erforderlich macht, deshalb autonom bewegliche Vorrichtungen zur Justierung der Brenngläser erfordert. Bietet zusätzliche Effizienz bei der Aufheizung des Brennpunktkörpers.

Logikbaustein XC500001 für Aktivierung der Fokussierungsvorrichtung:

Die Logik XC500001 selbst wird extern von dem führenden übergeordneten Prozess angesteuert. Der Prozess bestimmt ob die Fokussierungsvorrichtung aktiviert werden soll. Bei autonomen Betrieb, wird um den Temperaturschaltpunkt mit Hysterese der erlaubten Betriebstemperatur am Brennpunktkörper die Aktivierung gesteuert.

2.3 Fokussierungsvorrichtung mit Blenden und Taktung X5000

produziert durch fokussiertes Licht an seinem Brennpunkt Wärmenergie und stellt dieses als thermische Energie zur Verfügung.

Gegenüber der geothermische Energie, der Erdwärme-Technologie , hat sie folgenden Vorteile:

1.) die Skalierbarkeit;
2.) die Portabilität;
3.) die standardisierte Produzierbarkeit;
4.) die Ebenerdige Bündelung und Bereitstellung von thermischer Energie;
5.) für Regionen wie z.B. Europa die zwischen Äquator und dem Nordpol um die 45° liegen, können auf der Sonnenabgewandten Seite durch Reflexion mit Spiegeln in Kuppelhöhe angebracht, es einen Vorteil darstellt;
6.) keine Beeinträchtigung durch Humangeographie, auch Anthropogeographie genannt im Erdreich für Fauna und Flora, hat;
7.) Energiegewinnung ohne Eingriff in den geothermischen Prozesses im Erdinneren erzeugt.

Gegenüber der geothermische Energie, der Erdwärme-Technologie , hat sie folgenden Nachteile:

1.) sie erzeugt nicht kontinuierlich Energie am Brennpunktkörper, daher bedarf es grö-βerer Wärmespeicherung. Die am Brennpunktkörper produzierte thermische Energie muß erstmal überproduziert werden um es gespeichert zu werden;
2.) die Arretierung alleine ist aus der Sicherheitsperspektive nicht ausreichend, bei einer ungewollten Verharrung in der Einschaltposition kann es zu Schaden am Leib und Leben führen. Es sind Maßnahmen wie mit Planen zu überdecken oder das Zerstören der Brenngläser erforderlich;
3.) Um Schutz vor Wind und Wetter zu gewährleisten ist eine 3. Kuppel erforderlich; welches Lichtdurchlässig sein muß;
4.) Bedingt durch die elliptische Erdumlaufbahn um die Sonne, wird der Brennpunkt um einen Bereich sowohl in Höhe als Weite wandern, welches ein Verlust von Effizienz bedeutet und zusätzliche Maßnahmen erforderlich macht, wie z.B. autonom bewegliche Brenngläser.

Sie kann aufgrund der genanten Vorteile in folgenden Beispielen eine Anwendung finden:

1.) Als thermische Solar-Energie Generator;
2.) Als Fern-Wärme-Erzeuger;
3.) Als Anbau zu vorhandenem Fern-Wärme-Netz zur Reduzierung des Energieverbrauchs, und somit den Anteil des fossilen Energieverbrauchs vorhandener Anlagen;
4.) Als eine Dach-Konstruktion auf Gebäuden zur Wärmegewinnung;
5.) Als eine im Garten auf einem Hügel befindliche Konstruktion zur Wärmegewinnung;
6.) Als eine im Keller mit abgelenktem Licht betriebene Konstruktion zur Wärmegewinnung;
7.) Als eine portable Konstruktion auf unterschiedliche Wärmeaustauschflächen.

1. Die Tesla-Klappen-Kammer als thermische Trennung und Sperre in eine Richtung von Flüssigkeiten.

2.1 Zur Trennung von Flüssigkeiten werden Ventile verwendet. Rückschlagventile verhindern durch einen Mechanismus den Rückfluss in eine bestimmte Richtung.

Die Erfindung des Herrn Nikolai Tesla aus dem Patent US1329559A: Valvular conduit. Angemeldet am 21. Februar 1916, veröffentlicht am 3. Februar 1920, Erfinder: Nikola Tesla, wird das Tesla-Ventil genannt. Das Tesla-Ventil von Tesla, besteht aus mehreren ineinandergreifenden Segmenten die zunächst gerade verlaufen dann in einer Krümmung in das nächste Segment führen, wobei es an dieser Stelle eine Verwirbelung entstehen lässt, welches für den Durchfluß in Richtung der Krümmung einen Widerstand erzeugt. Der Vorteil ist, es sind keine mechanischen Verschleissteile erforderlich. Jedoch braucht es eine bestimmte Anzahl dieser Segmente um den Effekt eines Absperrens von Flüssigkeiten in einer Richtung zu erreichen. Des weiteren lässt sich eine thermische Vermischung der Flüssigkeiten nicht verhindern. Eine Überlauffunktion wird in der heutigen Technologie für verschiedene Zwecke genutzt.

2.2 Die Tesla-Klappen-Kammer (2400) entspringt der Idee von Tesla, ein gekrümmtes Rohrsegment (2460) zu nutzen. Das gekrümmte Rohrsegment (2460) ist auf der Höhe von seinem Rohr-Aussendurchmesser auf der gekrümmten Seite abgeschnitten. Die bis zur Krümmung gerade verlaufende Seite ist mittig zum Eingangsstutzen 1 (2440) der Tesla-Klappen-Kammer (2400) angebracht. Das gekrümmte Rohrsegment (2460) liegt vertikal in der Kammer, so dass die Öffnung der gekrümmten Seite nach oben zeigt, wie ein Überlauf.

Variante 1:

Die Tesla-Klappen-Kammer (2400) besteht aus 2 Kammern die miteinander über eine Öffnung (2430) der Größe des Rohrinnendurchmessers verbunden sind. In der Kammer 1 (2410) befindet das gekrümmte Rohrsegment (2460). In der Kammer 2 (2420) befindet sich zusätzlich eine Klappe (2470) welches mit 2 Bolzen (2470) an den Seiten in den Fugen (2470) der Seitenwänden der Kammer schwenkbar mit spiel hängt. Eine U-Form (2480) aus Quadern an den Seitenwänden der Kammer verhindert, dass die Klappe sich nicht über einen gewünschten Winkel hinaus öffnet. Der passgenaue Deckel (2490) wird nach einmontieren der Klappe (2470) permanent verschlossen. Der Eingangsstutzen Stutzen 1 (2440) sitzt vor Kammer 1 (2410), Der Ausgangsstutzen Stutzen 2 (2450) sitzt hinter der Kammer 2 (2420). Die Barrierenhöhe H1 = (Rohraussendurchmesser - Rohrinnendurchmesser)/2. Das Rohrsegment (2460) mit Isoliereigenschaft, verhindert den direkten Kontakt der Flüssigkeiten. Die Kontaktdauer ist reduziert auf die Zeit, die vergeht bis der Füllstand an der Ausgangsseite durch abfliessen die Barrierenhöhe unterschreitet.

Variante 2:

Die Tesla-Klappen-Kammer (2700) besteht aus 2 separaten Kammern. Der Ausgangsstutzen Stutzen ist hinter der Kammer 1 (2710). Der Eingangsstutzen Stutzen ist vor der Kammer 2 (2720), angebracht. Die Kammer 1 und Kammer 2 werden je nach Erfordernis in erforderlicher Anzahl modular hintereinander mit dem Rohrstück (2730) verbunden. Die Kammer 1 (2710) in dem das gekrümmte Rohrsegment (2760) sitzt, isoliert und verringert Temperaturkurzschlüsse. Die Kammer 2 (2720) in dem das Klappe (2770) sitzt, isoliert und verringert auch Temperaturkurzschlüsse wegen der physikalische Trennung der Medien, zusätzlich bewirkt es in eine Richtung eine wirksame Sperre. Für beide Kammern gilt, dass jede Anzahl weiterer Kammern ihre Wirkung erhöht.

2.3 Die Tesla-Klappen-Kammer (2400;2700) die über die Eigenschaften des Rückschlagventils, der Durchflussreduzierung, des Überlaufs und der thermischen Trennung, verfügt hat gegenüber den einzeln vorhandenen Vorrichtungen nach heutigem Stand folgende Vorteile:

1.) kombinierte Eigenschaften in einer Vorrichtung;
2.) bedarfsorientierte Erweiterbarkeit;

3.) ist standardisiert Produzierbar;
4.) Reduzierung von Baumaterial.

Die Tesla-Klappen-Kammer (2400;2700) hat gegenüber den einzeln vorhandenen Vorrichtungen nach heutigem Stand folgende Nachteile:

1.) die Vorrichtung hat als Kombination eine kleines Anwendungsgebiet;
2.) sie kann ebenso aus den einzelnen Vorrichtung realisiert werden;
3.) bei Nutzung der Klappe, ist die Klappe selbst ein Verschleißteil.

Sie kann aufgrund der genanten Vorteile in folgenden Beispielen eine Anwendung finden:

1.) Als Rückschlagventil;
2.) Als Durchflussreduzierer;
3.) Als thermischer Trenner von in gleicher Höhe fließender Medien.

Glossar

Fresnel-Linse

Eine Fresnel-Linse oder genauer eine Fresnelsche Stufenlinse ist eine volumen- und massereduzierte Bauform einer optischen Linse. Da Licht nur beim Passieren der Linsen-Oberflächen gebrochen wird, ist der Brechungswinkel nicht von der Dicke, sondern nur von dem Winkel zwischen den beiden Oberflächen abhängig. Das Volumen bei der Fresnel-Linse ist durch eine Aufteilung in ringförmige Bereiche verringert, deren maximale Dicke ungefähr gleich ist. Durch die erforderliche Krümmung der Oberflächen erhält die Linse eine Reihe ringförmiger Stufen. Die Linse behält ihre Brennweite bei, aber die Abbildungsqualität wird durch die Stufenstruktur verschlechtert. (Nach https://de.wikipedia.org/wiki/Fresnel-Linse)

R&I-Fließschema

Ein R&I-Fließschema bezeichnet ein Rohrleitungs- und Instrumentenfließschema in der Anlagen- und Verfahrenstechnik. Im R&I-Fließschema werden alle für den Betrieb einer Anlage erforderlichen Bauteile, wie Behälter, Apparate, Pumpen, Verdichter, Wärmeübertrager (Wärmetauscher), Rohrleitungen, Armaturen und Messgeräte, symbolisch dargestellt. Für die Mess- und Regeltechnik wird in genormten Symbolen festgelegt, wo und was gemessen oder geregelt werden soll. (Nach https://de.wikipedia.org/wiki/R%26I-Flie%C3%9Fschema)

Tesla-Ventil

Ein Tesla-Ventil ist eine Vorrichtung, die als passives, fluidisches Ventil fungiert. Es kann als eine Art Rückschlagventil ohne bewegliche mechanische Teile betrachtet werden. Das Ventil wurde 1916 von Nikola Tesla zum Patent angemeldet. Die Grundidee ist, dass der Strömungswiderstand in eine Flussrichtung geringer als in die entgegengesetzte ist. Hierdurch lässt sich erreichen, dass die Strömung eine Vorzugsrichtung erhält oder das Fluid nur noch in eine Richtung strömt, also eine Gleichrichterwirkung erreicht wird.

Der Wirkungsmechanismus von Tesla-Ventilen ist stark von der Reynolds-Zahl (und damit auch von der Größe des Ventils) abhängig. In großen Ventilen mit turbulenter Strömung und Re > 1700 beruht die Ventilfunktion überwiegend auf Trägheitskräften. In mikroskopisch kleinen Ventilen mit vorwiegend laminarer Strömung und Re « 1000 dominieren hingegen Kräfte aufgrund der Viskosität des Fluids.

Das Tesla-Ventil unterbricht die Strömung in der Gegenrichtung nicht vollständig, sondern erhöht nur den Strömungswiderstand stark. Der große Vorteil eines solchen Ventils ist, dass keine beweglichen Teile vorkommen. Es wird in der Mikrofluidik, beispielsweise zur Zellkultur oder in Wärmerohren, eingesetzt. (Nach https://de.wikipedia.org/wiki/Teslaventil)

Wärmetransportfluid, Wärmeträger

Ein Wärmeträger (auch Wärmetransportmittel) ist ein Medium, das in einem Heiz- oder Kühlkreislauf Wärme von einem Ort höherer Temperatur zu einem Ort niedrigerer Temperatur transportiert. Wärmeträger werden in Rohrleitungen transportiert. Um die Energieverluste zu minimieren, werden kurze und gedämmte Rohrleitungsführungen angestrebt.

Wärmeträger sollten idealerweise folgenden Anforderungen genügen:

- hohe spezifische Wärmekapazität bzw. große spezifische Schmelzenthalpie

- großer Wärmeübergangskoeffizient

- hohe Wärmeleitfähigkeit

- ausreichend niedriger Gefrierpunkt / Erstarrungspunkt

- ausreichend hoher Siedepunkt / Zerfallspunkt

- niedrige Viskosität

- nicht brennbar oder explosiv

- nicht giftig

- nicht korrosiv gegenüber den verwendeten Werkstoffen und Anlagen

(Nach https://de.wikipedia.org/wiki/W%C3%A4rmetr%C3%A4ger)

Tabelle 1

| Schaltpunkt | Komponente | Beschreibung | LC100001.AUT.SV (100.1) | | | XV100002 (100.2) | | MV500001 (500.1) |
|---|---|---|---|---|---|---|---|---|
| | | | SV | 0 | 0 | AUF | | EIN |
| LS100001 (10.1) | Kalt-Reservoir B1000 | Unterkante Rohr | | | | | | 1 |
| LS100002 (10.2) | Kalt-Reservoir B1000 | Rohrmitte | | | | | | 1 |
| LS100003 (10.3) | Kalt-Reservoir B1000 | Oberkante Rohr | | | | 0 | | |
| LS100004 (10.4) | Kalt-Reservoir B1000 | Oberkante Rohr + Rohrdicke | | | | 0 | | |
| LC100001.PV (100.1) | Kalt-Reservoir B1000 | Istwert PV Füllstandsregler | | | | | | PV > ca. SV*0.7 |
| LS200001 (20.1) | Warm-Reservoir B2000 | Unterkante Rohr | | | | | | 1 |
| LS200002 (20.2) | Warm-Reservoir B2000 | Rohrmitte | | | | | | 1 |
| LS200003 (20.3) | Warm-Reservoir B2000 | Oberkante Rohr | | | | 1 | | |
| LS200004 (20.4) | Warm-Reservoir B2000 | Oberkante Rohr + Rohrdicke | | | | 1 | | |
| TS200001 (200.1) | Warm-Reservoir B2000 | Temperatur-Sollwert erreicht | 1 | | | 1 | | 0 |
| TS501001 (501.1) | Brennpunktkörper X5010 | Betriebstemperatur erreicht | 1 | | | 1 | | 0 |
| TS501002 (501.2) | Brennpunktkörper X5010 | Kritische Temperatur | | | 1 | | 1 | 0 |
| TZ500001 (500.2) | Wärmekollektor X5000 | Bimetall Temperatur erreicht | | 1 | | | 1 | 0 |
| EC000101.EIN | Anlage E0001 | Einschaltbefehl | 1 | | | 1 | | 1 |
| LC100001 (100.1) | Kalt-Reservoir B1000 | Füllstandsregler | | | | | | |
| LC100001.SV (100.1) | Kalt-Reservoir B1000 | Sollwert SV Füllstandsregler | | | | | | |
| LC100001.MV (100.1) | Kalt-Reservoir B1000 | Stellgröße MV Füllstandsregler | | | | | | |
| LC100001.AUT (100.1) | Kalt-Reservoir B1000 | Füllstandsregler Automatik | | | | | | |
| XV100002 (100.2) | Kalt-Reservoir B1000 | Magnetventil Zufuhr | | | | | | |
| MV500001 (500.1) | Wärmekollektor X5000 | Blendenvorrichtung Ein | | | | | | |

EP 4 328 517 A1

Bezugszeichen

| | |
|---|---|
| 1 | Reservoir für kaltes Wärmetransportfluid |
| 2 | Reservoir für warmes Wärmetransportfluid |
| 3, 4 | Flüssigkeitsturbine |
| 5 | Dampf-/Luft-Turbine |
| 6, 7, 8 | Kondensator |
| 6.1, 7.1, 8.1 | Klappe |
| 9, 1710 | Wärmekollektor |
| 10, 120, 1720, 1820 | Brennpunktkörper |
| 11, 12, 2400, 2700 | Überlauf-Klappen-Ventil |
| 13, 14, 1730, 1830 | Leitung |
| 15, 16, 17 | Rückführungsleitung |
| 18 | Abluft-Rückführung |
| 18.1 | Dampfstrang des Kondensators |
| 18.2 | Abschlussflansch |
| 21 | 15°-Düse |
| 22 | kurze Rohrleitung |
| 23 | Schaufelradturbine |
| 24 | Generator |
| 25 | Dampfeingang |
| 26 | Dampfausgang |
| 27 | Kondensatrückführung |
| 110, 200 | Halterung für optische Fokussiereinrichtungen |
| 130, 240 | optische Fokussiereinrichtung |
| 140 | Durchfluss |
| 210 | erste bzw. innere Kuppel |
| 220 | zweite bzw. äußere Kuppel |
| 230 | Lücke bzw. Abstand |
| 250 | Winkel |
| 260 | Radius der ersten Kuppel bzw. Brennweite |
| 265 | Schnitthöhe Hs |
| 270 | Radius der zweiten Kuppel |
| 345 | Aussparungen |
| 360, 380 | Achse bzw. Bolzen |
| 370 | Stellmotor |
| 390 | Lager |
| 425 | Kuppelsegment |
| 610 | zylindrischer Fuß bzw. Fundament |
| 810 | Spiegel |
| 1700, 1800 | Anlage zur Wärmeerzeugung |
| 1840 | Wannenparabolspiegel |
| 2410, 2710 | erste Kammer des Überlauf-Klappen-Ventils |
| 2420, 2720 | zweite Kammer des Überlauf-Klappen-Ventils |
| 2430 | Öffnung |
| 2440 | Eingangsstutzen |
| 2450 | Ausgangsstutzen |
| 2460, 2760 | aufwärts gekrümmtes Rohrsegment bzw. Überlauf |
| 2470,2770 | Rückschlagsklappe |
| 2480 | Verengung |
| 2490 | Deckel |
| 2730 | kurzes Rohrsegment |

zitierte Literatur

zitierte Patentliteratur

US 4,335,578 A
US 6,775,982 B1
US 2006/0225729 A1
WO 81/03220 A1
WO 2013/149950 A2

**Patentansprüche**

1. Vorrichtung zur Gewinnung von Solarenergie mit einer Halterung (110; 200) und optischen Fokussiereinrichtungen (130; 240),

   1.1 wobei jede der optischen Fokussiereinrichtungen (130; 240) der Vorrichtung zur Gewinnung von Solarenergie eine Brennweite und einen Brennpunkt aufweist;
   1.2 wobei alle optischen Fokussiereinrichtungen (130; 240) die gleiche Brennweite aufweisen;
   1.3 wobei die Halterung (110; 200) der Vorrichtung zur Gewinnung von Solarenergie die Form einer ersten halbkugelförmigen Kuppel (210) mit einem ersten Radius (260) oder eines Segments einer ersten halbkugelförmigen Kuppel mit einem ersten Radius hat;
   1.4 wobei der erste Radius (260) der ersten halbkugelförmigen Kuppel (210) durch die Brennweite der Fokussiereinrichtungen (130; 240) gegeben ist;
   1.5 wobei die Fokussiereinrichtungen (130; 240) in der Halterung (110; 200) so angeordnet sind, dass die Brennpunkte der Fokussiereinrichtungen (130; 240) zusammenfallen.

2. Vorrichtung nach dem vorhergehenden Anspruch,
   **dadurch gekennzeichnet,**
   **dass** es sich bei den Fokussiereinrichtungen (130; 240) um Linsen, bevorzugt um Fresnel-Linsen, handelt.

3. Vorrichtung nach einem der vorhergehenden Ansprüche,
   **gekennzeichnet durch**
   eine steuerbare Blendenvorrichtung zum Verdunkeln der optischen Fokussiereinrichtungen (130; 240).

4. Vorrichtung nach dem unmittelbar vorhergehenden Anspruch,
   **dadurch gekennzeichnet,**

   4.1 dass als Blendenvorrichtung eine zweite halbkugelförmige Kuppel (220) oder ein Segment einer zweiten halbkugelförmigen Kuppel mit einem zweiten Radius vorhanden ist;
   4.2 wobei der zweite Radius so viel größer als der erste Radius ist, dass die zweite halbkugelförmige Kuppel (220) oder das Segment einer zweiten halbkugelförmigen Kuppel außerhalb der ersten halbkugelförmigen Kuppel (210) oder des Segments einer ersten halbkugelförmigen Kuppel liegt;
   4.3 wobei die Blendenvorrichtung aus lichtundurchlässigem Material besteht;
   4.4 wobei die Blendenvorrichtung Öffnungen (345) für die Fokussiereinrichtungen (130; 240) aufweist;
   4.5 wobei die Blendenvorrichtung derart drehbar gelagert ist, dass sie zwischen einer ersten Position, in der die Öffnungen (345) die Fokussiereinrichtungen (130; 240) freigeben, und einer zweiten Position, in der die Blendenvorrichtung die Fokussiereinrichtungen (130; 240) verdeckt, gedreht und/oder geschwenkt werden kann.

5. Vorrichtung nach Anspruch 3,
   **dadurch gekennzeichnet,**
   **dass** die Blendenvorrichtung eine elektrochrome Folie umfasst, die die erste halbkugelförmige Kuppel (210) oder das erste Segment einer halbkugelförmigen Kuppel oder mindestens eine der Fokussiereinrichtungen (130; 240) bedeckt.

6. Vorrichtung nach einem der vorhergehenden Ansprüche,
   **dadurch gekennzeichnet,**
   **dass** an der sonnenabgewandten Seite der Halterung (110; 200) mindestens ein Spiegel (810) vorhanden ist.

7. Wärmekollektor (9) zum Erwärmen eines Wärmetransportfluids, mit

7.1 mindestens einer Vorrichtung nach einem der vorhergehenden Ansprüche, und

7.2 einem Brennpunktkörper (10; 120) für jede der Vorrichtungen;

7.2.1 wobei jeder Brennpunktkörper (10; 120) im jeweiligen Brennpunkt der optischen Fokussiereinrichtungen (130; 240) der mindestens einen Vorrichtung angeordnet ist;

7.2.2 wobei jeder Brennpunktkörper (10; 120) aus einem hitzebeständigen und wärmeleitenden Material besteht; und

7.2.3 wobei jeder Brennpunktkörper (10; 120) einen Durchfluss (140) für das Wärmetransportfluid aufweist.

**8.** Anlage zur Wärmeerzeugung mit

8.1 einem Reservoir (1) für kaltes Wärmetransportfluid;

8.2 einem Wärmekollektor (9) nach dem unmittelbar vorhergehenden Anspruch;

8.3 mindestens einem Reservoir (2) für warmes Wärmetransportfluid;

8.3.1 wobei das Wärmetransportfluid über geeignete Leitungen (13, 14) vom Reservoir (1) für kaltes Wärmetransportfluid durch den Wärmekollektor (9) zum Reservoir (2) für warmes Wärmetransportfluid strömt;

8.4 mindestens einem Anschluss für Wärmeverbraucher;

8.4.1 wobei der Anschluss für Wärmeverbraucher dem Reservoir (2) für warmes Wärmetransportfluid nachgeschaltet ist; und mit

8.5 mindestens einer Rückführungsleitung (15, 16, 17);

8.5.1 wobei die Rückführungsleitung (15, 16, 17) von dem Wärmeverbraucher zum Reservoir (1) für kaltes Wärmetransportfluid verläuft.

**9.** Anlage zur Wärmeerzeugung nach dem unmittelbar vorhergehenden Anspruch,
**dadurch gekennzeichnet,**
**dass** zwischen dem Reservoir (1) für kaltes Wärmetransportfluid und dem Wärmekollektor (9) und/oder in der Rückführungsleitung (15, 16, 17) mindestens ein Ventil vorhanden ist, das eine Vorzugsrichtung für einen Durchfluss aufweist.

**10.** Anlage zur Wärmeerzeugung nach dem unmittelbar vorhergehenden Anspruch, **dadurch gekennzeichnet,**
10.1 dass das mindestens eine Ventil ein wärmeisoliertes, nach oben gekrümmtes Rohr (2460; 2760) aufweist, welches einen Überlauf bildet, dem eine Rückschlagsklappe (2470; 2770) vor- und/oder nachgeschaltet ist.

**11.** Anlage zur Wärmeerzeugung nach einem der vorhergehenden Ansprüche 8 bis 10,
**dadurch gekennzeichnet,**
**dass** als Wärmeverbraucher Turbinen (3, 4, 5; 23) mit Generatoren (24) zur Stromerzeugung angeschlossen sind.

**12.** Anlage zur Wärmeerzeugung nach dem unmittelbar vorhergehenden Anspruch,
**dadurch gekennzeichnet,**
**dass** es sich bei mindestens einer Turbine um eine Flüssigkeitsturbine (3) mit 15°-Düse (21) handelt.

**13.** Anlage zur Wärmeerzeugung nach einem der vorhergehenden Ansprüche 8 bis 12,
**dadurch gekennzeichnet,**
**dass** an der mindestens einen Rückführungsleitung (15, 16, 17) mindestens ein Kondensator (6, 7, 8) vorhanden ist.

**14.** Anlage zur Wärmeerzeugung nach einem der vorhergehenden Ansprüche 8 bis 13, **gekennzeichnet durch**

14.1 eine steuerbare Wärmetransportfluidzufuhr am Reservoir (1) für kaltes Wärmetransportfluid;

14.2 eine Mehrzahl von Füllstandssensoren am Reservoir (1) für kaltes Wärmetransportfluid und/oder am Reservoir (2) für warmes Wärmetransportfluid;

14.3 einen Füllstandsregler zur Regelung mindestens eines Füllstands des Wärmetransportfluids in der Anlage mittels Steuerung der Wärmetransportfluidzufuhr in Abhängigkeit von den mittels der Füllstandssensoren gemessenen Füllständen;

14.4 jeweils einen Temperatursensor am Reservoir (2) für warmes Wärmetransportfluid und an jedem Brennpunktkörper (10; 120) des Wärmekollektors (9); und

14.5 eine Steuerung für den Füllstandsregler und die mindestens eine steuerbare Blendenvorrichtung.

**15.** Verfahren zur Steuerung einer Anlage zur Wärmeerzeugung nach einem der vorhergehenden Ansprüche 8 bis 14,
**dadurch gekennzeichnet,**
**dass** die Logik des Verfahrens gemäß der folgenden Wahrheitstabelle vorgegeben ist:

| Schaltpunkt | Komponente | Beschreibung | LC100001.AUT.SV (100.1) | | | XV100002 (100.2) | | MV500001 (500.1) |
|---|---|---|---|---|---|---|---|---|
| | | | SV | 0 | 0 | AUF | | EIN |
| LS100001 (10.1) | Kalt-Reservoir B1000 | Unterkante Rohr | | | | | | 1 |
| LS100002 (10.2) | Kalt-Reservoir B1000 | Rohrmitte | | | | | | 1 |
| LS100003 (10.3) | Kalt-Reservoir B1000 | Oberkante Rohr | | | | 0 | | |
| LS100004 (10.4) | Kalt-Reservoir B1000 | Oberkante Rohr + Rohrdicke | | | | 0 | | |
| LC100001.PV (100.1) | Kalt-Reservoir B1000 | Istwert PV Füllstandsregler | | | | | | PV > ca. SV*0.7 |
| LS200001 (20.1) | Warm-Reservoir B2000 | Unterkante Rohr | | | | | | 1 |
| LS200002 (20.2) | Warm-Reservoir B2000 | Rohrmitte | | | | | | 1 |
| LS200003 (20.3) | Warm-Reservoir B2000 | Oberkante Rohr | | | | 1 | | |
| LS200004 (20.4) | Warm-Reservoir B2000 | Oberkante Rohr + Rohrdicke | | | | 1 | | |
| TS200001 (200.1) | Warm-Reservoir B2000 | Temperatur-Sollwert erreicht | 1 | | | 1 | | 0 |

| | | | | | | | | | |
|---|---|---|---|---|---|---|---|---|---|
| TS501001 (501.1) | Brennpunktkörper X5010 | Betriebstemperatur erreicht | 1 | | | 1 | | | 0 |
| TS501002 (501.2) | Brennpunktkörper X5010 | Kritische Temperatur | | | 1 | | | 1 | 0 |
| TZ500001 (500.2) | Wärmekollektor X5000 | Bimetall Temperatur erreicht | | 1 | | | 1 | | 0 |
| EC000101.EIN | Anlage E0001 | Einschaltbefehl | 1 | | | 1 | | | 1 |
| LC100001 (100.1) | Kalt-Reservoir B1000 | Füllstandsregler | | | | | | | |
| LC100001.SV (100.1) | Kalt-Reservoir B1000 | Sollwert SV Füllstandsregler | | | | | | | |
| LC100001.MV (100.1) | Kalt-Reservoir B1000 | Stellgröße MV Füllstandsregler | | | | | | | |
| LC100001.AUT (100.1) | Kalt-Reservoir B1000 | Füllstandsregler Automatik | | | | | | | |
| XV100002 (100.2) | Kalt-Reservoir B1000 | Magnetventil Zufuhr | | | | | | | |
| MV500001 (500.1) | Wärmekollektor X5000 | Blendenvorrichtung Ein | | | | | | | |

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

EP 4 328 517 A1

Fig. 21

Fig. 22

Fig. 23

Fig. 24

Fig. 25

Fig. 26

Fig. 27

Europäisches Patentamt
European Patent Office
Office européen des brevets

# EUROPÄISCHER RECHERCHENBERICHT

**Nummer der Anmeldung**

**EP 23 17 0505**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 422 434 A (STATZ ROBERT G [US] ET AL) 27. Dezember 1983 (1983-12-27) | 1-7,10, 12,14,15 | INV. F24S10/70 |
| Y | * Spalte 2, Zeile 38 – Spalte 3, Zeile 27; Abbildungen 1-4 * | 8,9,11, 13 | F24S20/20 F24S23/30 F24S40/10 |
| X | US 4 057 048 A (MAINE DEWITT C) 8. November 1977 (1977-11-08) * Abbildungen 1,2 * | 1,15 | F24S40/52 |
| X | JP S50 97946 A (NA) 4. August 1975 (1975-08-04) * Abbildungen 1,2 * | 1,15 | ADD. F24S23/70 F24S60/30 F24S80/50 |
| Y | US 2005/126560 A1 (LITWIN ROBERT Z [US]) 16. Juni 2005 (2005-06-16) * Absätze [0054], [0056] – Absatz [0058]; Abbildung 16 * | 8,9,11, 13 | |
| A | WO 2009/105587 A2 (BUCKY SOLAR INC [US]; LIU TRICIA [US]) 27. August 2009 (2009-08-27) * Seite 58, Zeile 33 – Seite 59, Zeile 29; Abbildung 61 * | 1-15 | RECHERCHIERTE SACHGEBIETE (IPC) F01K |
| A | US 4 136 670 A (DAVIS THEODORE L) 30. Januar 1979 (1979-01-30) * das ganze Dokument * | 1-15 | F22B F24S |
| A | US 2020/109852 A1 (HARRIAT SAMUEL [US]) 9. April 2020 (2020-04-09) * das ganze Dokument * | 1-15 | |
| A | US 3 822 692 A (DEMAREST J) 9. Juli 1974 (1974-07-09) * das ganze Dokument * | 1-15 | |
| A | US 4 273 099 A (MORGAN BURTON D) 16. Juni 1981 (1981-06-16) * das ganze Dokument * | 1-15 | |

Der vorliegende Recherchenbericht wurde für alle Patentansprüche erstellt

| Recherchenort | Abschlußdatum der Recherche | Prüfer |
|---|---|---|
| Den Haag | 14. Dezember 2023 | Mendão, João |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 23 17 0505

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-12-2023

| Im Recherchenbericht angeführtes Patentdokument | Datum der Veröffentlichung | Mitglied(er) der Patentfamilie | Datum der Veröffentlichung |
|---|---|---|---|
| US 4422434 A | 27-12-1983 | KEINE | |
| US 4057048 A | 08-11-1977 | KEINE | |
| JP S5097946 A | 04-08-1975 | KEINE | |
| US 2005126560 A1 | 16-06-2005 | US 2005126560 A1<br>US 2006225729 A1 | 16-06-2005<br>12-10-2006 |
| WO 2009105587 A2 | 27-08-2009 | KEINE | |
| US 4136670 A | 30-01-1979 | KEINE | |
| US 2020109852 A1 | 09-04-2020 | KEINE | |
| US 3822692 A | 09-07-1974 | KEINE | |
| US 4273099 A | 16-06-1981 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8103220 A1
- US 4335578 A
- US 20060225729 A1
- US 6775982 B1
- WO 2013149950 A2
- US 1329559 A,  Nikola Tesla